# EUROPEAN PATENT APPLICATION

(11) **EP 4 790 408 A1**
(43) Date of publication of application: **12.08.2026**
(21) Application number: 26156685.5
(22) Date of filing: 05.02.2026
(51) Int. Cl.: G01N 30/60

(54) **SPRING FORCE LIMITING LIQUID CHROMATOGRAPHY FITTING FOR CONNECTING AND DISCONNECTING CAPILLARIES**

(30) Priority: 07.02.2025 US 202563755591 P
(71) Applicant: Agilent Technologies, Inc., Santa Clara, CA 95051 (US)
(72) Inventor: VAN VENROOY, Manuel, 76337 Waldbronn (DE); MATZ, Patrick, 76337 Waldbronn (DE)
(74) Representative: Grünecker Patent- und Rechtsanwälte PartG mbB

(57) **Abstract**

In some examples, a capillary connection fitting may include a screw drive, and a screw rotatable by the screw drive and insertable in a port. A spring carrier may be operatively disposed between the screw drive and the screw, and movable along an axis of the spring carrier by the screw drive to impart, by the screw, a sealing axial force to seal a capillary tip of a capillary against a port ground of the port.

## Description

### BACKGROUND

In fields such as high-performance liquid chromatography (HPLC), capillaries may be connected, for example, to instruments, valves, columns, each other, etc. Generally, a fitting may be utilized to connect a capillary to a port by screwing the fitting into the port, or otherwise connecting the fitting to the port. In some cases, the fitting may include some type of integrated torque limiting or torque indicating features for proper installation.

### BRIEF DESCRIPTION OF DRAWINGS

Features of the present disclosure are illustrated by way of example and not limited in the following figure(s), in which like numerals indicate like elements, in which:
Figure 1 illustrates an isometric assembled view, and a cross-sectional view of a first embodiment of a spring force limiting liquid chromatography (LC) fitting for connecting and disconnecting capillaries (hereinafter "capillary connection fitting"), in accordance with an example of the present disclosure;
Figure 2 illustrates an isometric exploded view, and a cross-sectional view of the capillary connection fitting of Figure 1, in accordance with an example of the present disclosure;
Figure 3 illustrates a cross-sectional view, similar to the cross-sectional view of Figure 1, of the capillary connection fitting of Figure 1, illustrating a spring-loaded disc pushing against a socket of a capillary, pushing the capillary to a port ground, and thereby activating a sealing section, in accordance with an example of the present disclosure;
Figure 4 illustrates a cross-sectional view and a diagrammatic view of the capillary connection fitting of Figure 1 without certain components, illustrating how when a screw is installed and a screw drive is turned, torque is transmitted to the screw via a spring-loaded disc, in accordance with an example of the present disclosure;
Figure 5 illustrates a cross-sectional view and a diagrammatic view of the capillary connection fitting of Figure 1 without certain components, illustrating how as a capillary is pressed into a port ground and a spring is compressed via a spring-loaded disc, and when a maximum needed sealing force is reached, the spring-loaded disc is decoupled from the screw drive and the screw drive rotates freely, in accordance with an example of the present disclosure;
Figure 6 illustrates a diagrammatic view of the capillary connection fitting of Figure 1 without certain components, illustrating how when the screw drive is turned further, no torque is transmitted to the screw but there is an indication that a maximum axial force is reached, in accordance with an example of the present disclosure;
Figure 7 illustrates different sealing techniques to illustrate operation of the capillary connection fitting of Figure 1, in accordance with an example of the present disclosure;
Figure 8 illustrates an isometric assembled view, and a cross-sectional view of a second embodiment of a capillary connection fitting, in accordance with an example of the present disclosure;
Figure 9 illustrates an isometric exploded view, and a cross-sectional view of the capillary connection fitting of Figure 8, in accordance with an example of the present disclosure;
Figure 10 illustrates cross-sectional views of a screw drive of the capillary connection fitting of Figure 8, to illustrate operation of lock balls, in accordance with an example of the present disclosure;
Figure 11 illustrates a cross-sectional view, similar to the cross-sectional view of Figure 8, of the capillary connection fitting of Figure 8, illustrating a ball lock mechanism, in accordance with an example of the present disclosure;
Figure 12 illustrates various cross-sectional views of the capillary connection fitting of Figure 8, illustrating operation of lock balls and flexible fingers for torque transmission to a screw, in accordance with an example of the present disclosure;
Figure 13 illustrates a cross-sectional view of a first stage of a connection operation of the capillary connection fitting of Figure 8, illustrating an initial stage when the capillary connection fitting is screwed into a port and a capillary tip of a capillary touches a port ground of the port, lock balls transmit torque in clockwise and counter-clockwise directions to a screw and are radially blocked by a spring carrier, in accordance with an example of the present disclosure;
Figure 14 illustrates a cross-sectional view of a second stage of the connection operation of the capillary connection fitting of Figure 8, illustrating a further stage when the fitting is screwed into the port and a sealing force on the capillary tip against the port ground is increased by a spring, the lock balls transmit torque in clockwise and counter-clockwise directions to the screw and are radially blocked by the spring carrier, in accordance with an example of the present disclosure;
Figure 15 illustrates a cross-sectional view of a third stage of the connection operation of the capillary connection fitting of Figure 8, illustrating a further stage when the fitting is fully screwed into the port and the sealing force on the capillary tip against the port ground is maximum, the lock balls are not radially blocked by the spring carrier, in accordance with an example of the present disclosure;
Figure 16 illustrates a cross-sectional view of a fourth stage of the connection operation of the capillary connection fitting of Figure 8, illustrating a further stage when the fitting is fully screwed into the port and the sealing force on the capillary tip against the port ground is maximum, the lock balls move radially to the center when trying to further screw in the screw, in accordance with an example of the present disclosure;
Figure 17 illustrates a cross-sectional view of a first stage of a disconnection operation of the capillary connection fitting of Figure 8, illustrating a first stage when flexible fingers contact freewheel teeth and start to apply torque in an unscrewing direction of the screw, in accordance with an example of the present disclosure;
Figure 18 illustrates a cross-sectional view of a second stage of the disconnection operation of the capillary connection fitting of Figure 8, illustrating a second stage of continuation of torque application in the unscrewing direction of the screw, in accordance with an example of the present disclosure;
Figure 19 illustrates a cross-sectional view of a third stage of the disconnection operation of the capillary connection fitting of Figure 8, illustrating a third stage of continuation of torque application with the lock balls in the unscrewing direction of the screw, in accordance with an example of the present disclosure;
Figure 20 illustrates a cross-sectional view of a third embodiment of a capillary connection fitting, in accordance with an example of the present disclosure;
Figure 21 illustrates various cross-sectional views of the capillary connection fitting of Figure 20, illustrating operation of a clutch, a wrap spring clutch, and flexible fingers, in accordance with an example of the present disclosure;
Figure 22 illustrates cross-sectional views of the capillary connection fitting of Figure 20, illustrating operation of a clutch, in accordance with an example of the present disclosure;
Figure 23 illustrates cross-sectional views of the capillary connection fitting of Figure 20, illustrating operation of a spring carrier, in accordance with an example of the present disclosure;
Figure 24 illustrates cross-sectional views of the capillary connection fitting of Figure 20, illustrating operation of a release mechanism, in accordance with an example of the present disclosure;
Figure 25 illustrates cross-sectional views of the capillary connection fitting of Figure 20, illustrating an alternative release mechanism, in accordance with an example of the present disclosure;
Figure 26 illustrates a cross-sectional view of a fourth embodiment of a capillary connection fitting, in accordance with an example of the present disclosure;
Figure 27 illustrates further details of the capillary connection fitting of Figure 26, in accordance with an example of the present disclosure;
Figure 28 illustrates an isometric assembled view, and a cross-sectional view of a fifth embodiment of a capillary connection fitting, in accordance with an example of the present disclosure;
Figure 29 illustrates an isometric exploded view, and a cross-sectional view of the capillary connection fitting of Figure 28, in accordance with an example of the present disclosure;
Figure 30 illustrates a cross-sectional view, similar to the cross-sectional view of Figure 28, of the capillary connection fitting of Figure 28, illustrating components such as a spring-loaded disc, a torque transmitter, a screw, and a tool-operated screw drive, in accordance with an example of the present disclosure;
Figure 31 illustrates cross-sectional views of the capillary connection fitting of Figure 28, illustrating how when a screw is installed and a screw drive is turned, torque is transmitted to the screw via a torque transmitter, in accordance with an example of the present disclosure;
Figure 32 illustrates cross-sectional and enlarged views of the capillary connection fitting of Figure 28, illustrating how when a capillary is pressed into a port ground of a port and a spring is compressed via a spring-loaded disc, when a maximum needed sealing force is reached, the torque transmitter is decoupled from the screw drive and the screw drive can rotate freely, in accordance with an example of the present disclosure; and
Figure 33 illustrates a cross-sectional view of the capillary connection fitting of Figure 28, illustrating how when a screw drive is turned further, no torque is transmitted to the screw but there is an indication that a maximum axial force is reached, in accordance with an example of the present disclosure.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

A spring loaded fitting for connecting and disconnecting capillaries (hereinafter "capillary connection fitting") is disclosed herein. For the capillary connection fitting disclosed herein, a spring-loaded screw connection may decouple from a screw drive when a certain axial force is reached.

With respect to the capillary connection fitting disclosed herein, in fields such as high-performance liquid chromatography (HPLC), capillaries may be connected, for example, to instruments, valves, columns, each other, etc. Generally, a fitting may be utilized to connect a capillary to a port by screwing the fitting into the port. In this regard, a certain amount of torque (depending on a maximum pressure) is needed to apply a specified axial sealing force to install the fitting to the port. In some cases, tools may be needed to install the fitting to the port. The fitting may need to be installed properly (e.g., tight enough but also not too tight), and include some type of integrated torque limiting or torque indicating features (e.g., ratchet). Moreover, the fitting and associated port connection may undergo temperature and pressure cycles during connection and disconnection of the fitting to the port. In this regard, for fittings that include torque limiting or torque indicating features, it is technically challenging to implement such fittings in a size that is relatively small. Moreover, it is technically challenging to implement such fittings such that the torque applied to the fitting and/or the port is precisely controlled. For example, factors such as thread friction, tolerances, etc., may fluctuate, resulting in a predefined torque being insufficient to achieve a specified axial force required for sealing, while at other times the specified axial force may already be far exceeded by the time the torque is reached. These factors can result in a leaking connection in case of higher thread friction, or to overtightening and damaging of the sealing surface between the fitting and the port in the case of lower thread friction.

In order to address at least the aforementioned technical challenges, the capillary connection fitting disclosed herein provides a connection mechanism that is independent of torque (and therefore from thread friction), resulting in a reliable and repeatable sealing force. Operation of the capillary connection fitting disclosed herein is also independent of port depth, and without any influence from thread depth. The capillary connection fitting disclosed herein provides for repeatable operation, without the possibility of operating errors. Further, the capillary connection fitting disclosed herein includes a spring element to compensate for relaxation over time (e.g., in a thread section, and in a sealing section due to temperature cycles).

According to examples disclosed herein, a capillary connection fitting may include a screw drive, and a screw rotatable by the screw drive and insertable in a port. A spring-loaded disc may be operatively disposed between the screw drive and the screw, and rotatable by the screw drive to impart, by the screw, a sealing axial force to seal a capillary tip of a capillary against a port ground of the port.

According to examples of the capillary connection fitting disclosed herein, the capillary connection fitting may further include a spring compressably disposed between the spring-loaded disc and an end cap to impart the sealing axial force.

According to examples of the capillary connection fitting disclosed herein, the screw drive may include at least one screw drive member contiguously engageable with a corresponding drive protrusion of the spring-loaded disc to rotate the spring-loaded disc. The at least one screw drive member may include a surface that is generally parallel to a contact surface of the corresponding drive protrusion of the spring-loaded disc to rotate the spring-loaded disc.

According to examples of the capillary connection fitting disclosed herein, the screw drive may include at least one resilient torque indicating protrusion engageable with a corresponding drive protrusion of the spring-loaded disc to generate an indication of a maximum sealing axial force to seal the capillary tip of the capillary against the port ground of the port. The at least one resilient torque indicating protrusion may be angled in a first direction to resiliently bend and generate the indication of the maximum sealing axial force. Further, the at least one resilient torque indicating protrusion may be angled in a second direction to contact the corresponding drive protrusion of the spring-loaded disc to rotate the spring-loaded disc.

According to examples of the capillary connection fitting disclosed herein, the spring-loaded disc may include at least one drive protrusion contiguously engageable with at least one driven column of the screw to rotate the screw.

According to examples disclosed herein, a capillary connection fitting may include a screw drive to rotate a screw. Further, the capillary connection fitting may include a spring-loaded disc operatively disposed between the screw drive and the screw, and rotatable by the screw drive to impart, by the screw, a sealing axial force to seal a capillary tip of a capillary against a port ground of a port.

According to examples disclosed herein, a capillary connection fitting may include a spring-loaded disc to impart, by a screw, a sealing axial force to seal a capillary tip of a capillary against a port ground of a port. The spring-loaded disc may include at least one drive protrusion contiguously engageable with at least one driven column of the screw to rotate the screw.

According to examples disclosed herein, a capillary connection fitting may include a screw drive, and a screw rotatable by the screw drive and insertable in a port. A spring carrier may be operatively disposed between the screw drive and the screw, and movable along an axis of the spring carrier by the screw drive to impart, by the screw, a sealing axial force to seal a capillary tip of a capillary against a port ground of the port.

According to examples of the capillary connection fitting disclosed herein, the capillary connection fitting may further include a spring compressably disposed between the spring carrier and an end cap to impart the sealing axial force.

According to examples of the capillary connection fitting disclosed herein, the capillary connection fitting may further include at least one lock ball disposed adjacent to the spring carrier and radially movable between blocked and unblocked positions relative to the spring carrier based on axial movement of the spring carrier.

According to examples of the capillary connection fitting disclosed herein, the at least one lock ball may be radially movable to the unblocked position towards the axis of the spring carrier to decouple a driving engagement between the screw drive and the screw.

According to examples of the capillary connection fitting disclosed herein, the at least one lock ball may be radially movable to the blocked position away from the axis of the spring carrier to impart a driving engagement between the screw drive and the screw.

According to examples of the capillary connection fitting disclosed herein, the screw drive may include at least one resilient finger engageable with at least one corresponding freewheel tooth to generate, upon rotation of the screw drive, an indication of a maximum sealing axial force to seal the capillary tip of the capillary against the port ground of the port.

According to examples of the capillary connection fitting disclosed herein, the screw drive may include at least one resilient finger engageable with at least one corresponding freewheel tooth to unseal, upon rotation of the screw drive, the capillary tip of the capillary from the port ground of the port.

According to examples of the capillary connection fitting disclosed herein, the capillary connection fitting may further include a spring to bias the spring carrier. In one example, the spring may be formed of stacked spring washers.

According to examples of the capillary connection fitting disclosed herein, the capillary connection fitting may further include at least one lock ball disposed adjacent to the spring carrier and radially movable relative to the spring carrier. Further, a clutch may be operatively connected to or formed with the screw drive to provide a continuous surface for the at least one lock ball to roll on. In one example, the clutch may include a hexagonal shape.

According to examples of the capillary connection fitting disclosed herein, the capillary connection fitting may further include a coiled spring disposed on an outer surface of a screw mount and including a driver that is movable upon rotation of the screw drive to transmit torque from the screw.

According to examples of the capillary connection fitting disclosed herein, the capillary connection fitting may further include a ratchet disposed on a screw mount connected to or formed with the screw. The screw drive may include at least one ramp to interact with the ratchet to transmit torque from the screw drive to the screw.

According to examples disclosed herein, a capillary connection fitting may include a screw drive to rotate a screw. Further, a spring carrier may be operatively disposed between the screw drive and the screw, and movable along an axis of the spring carrier by the screw drive to impart, by the screw, a sealing axial force to seal a capillary tip of a capillary against a port ground of a port.

According to examples disclosed herein, a capillary connection fitting may include a spring carrier movable along an axis of the spring carrier upon rotation of a screw drive to impart, by a screw, a sealing axial force to seal a capillary tip of a capillary against a port ground of a port.

According to examples disclosed herein, a capillary connection fitting may include a screw drive, and a screw rotatable by the screw drive and insertable in a port. A spring-loaded disc may be operatively disposed between the screw drive and the screw, and axially movable by a socket of a capillary to impart, by the spring-loaded disc, a sealing axial force to seal a capillary tip of the capillary against a port ground of the port.

According to examples of the capillary connection fitting disclosed herein, the capillary connection fitting may further include a spring compressably disposed between the spring-loaded disc and a spring retainer to impart the sealing axial force.

According to examples disclosed herein, the spring may be formed of stacked spring washers.

According to examples disclosed herein, the screw drive may include at least one freewheel tooth contiguously engageable with at least one corresponding flexible finger of an opening member to generate an indication of a maximum sealing axial force to seal the capillary tip of the capillary against the port ground of the port.

According to examples disclosed herein, the opening member may be fixedly connected to a torque transmitter that is fixedly connected to the screw.

According to examples disclosed herein, the screw drive may include a plurality of freewheel teeth contiguously engageable with corresponding flexible fingers of an opening member to generate an indication of a maximum sealing axial force to seal the capillary tip of the capillary against the port ground of the port.

According to examples disclosed herein, the capillary may be disposable through the screw drive, the screw, and the spring-loaded disc.

According to examples disclosed herein, a capillary connection fitting may include a screw drive to rotate a screw. a spring-loaded disc may be operatively disposed between the screw drive and the screw, and axially movable by a socket of a capillary to impart, by the spring-loaded disc, a sealing axial force to seal a capillary tip of the capillary against a port ground of a port.

According to examples disclosed herein, a capillary connection fitting may include a spring-loaded disc operatively disposed between a screw drive and a screw, and axially movable by a socket of a capillary to impart, by the spring-loaded disc, a sealing axial force to seal a capillary tip of the capillary against a port ground of a port.

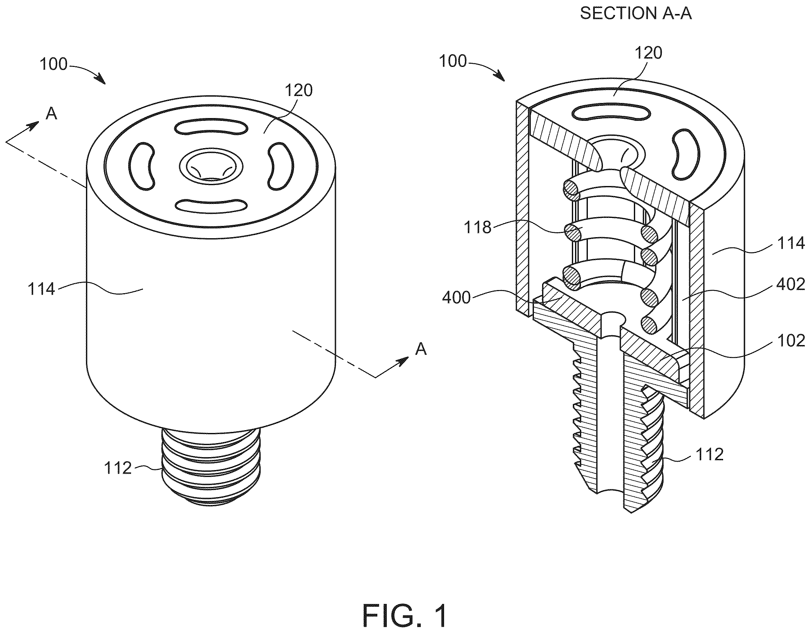

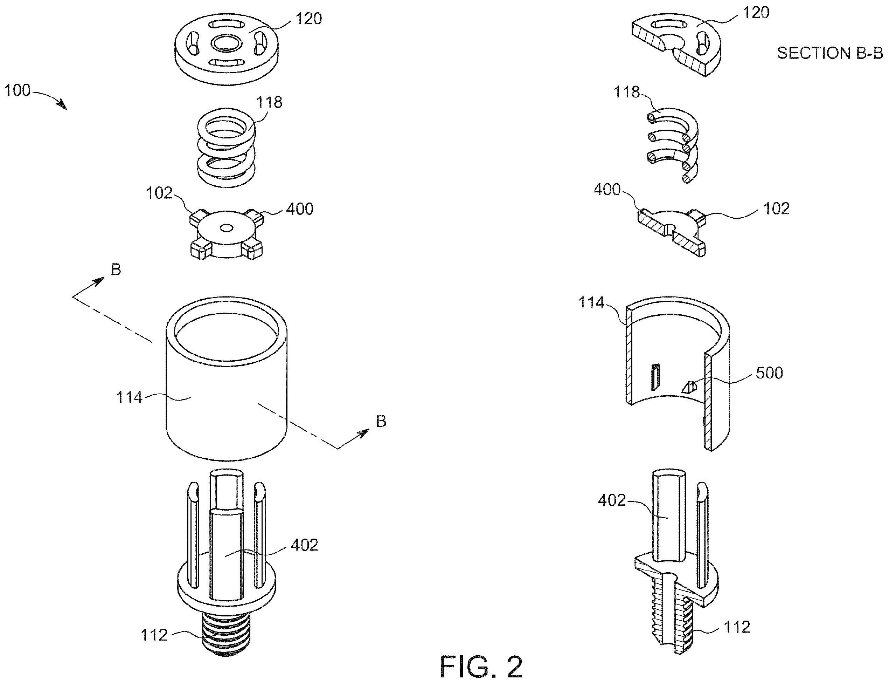

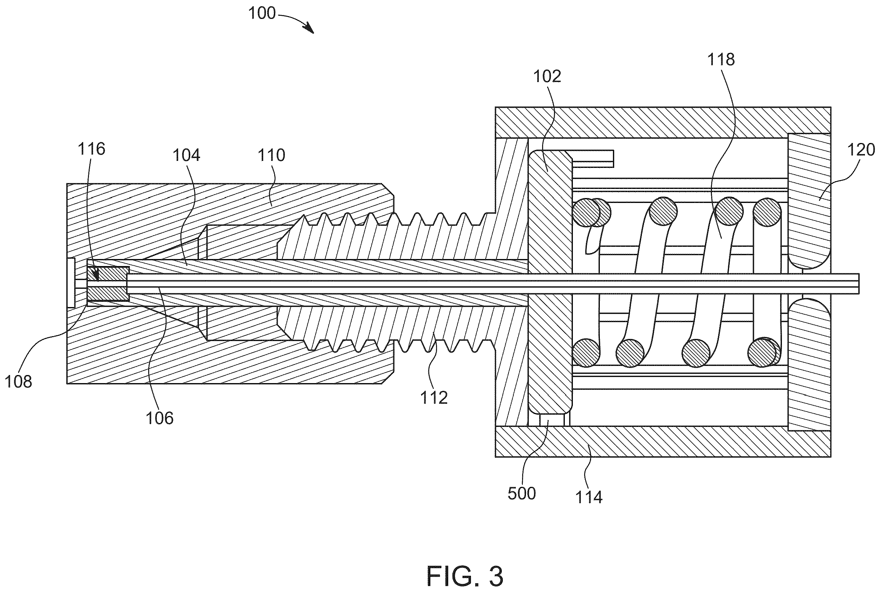

Figure 1 illustrates an isometric assembled view, and a cross-sectional view of a spring force limiting liquid chromatography (LC) fitting for connecting and disconnecting capillaries (hereinafter "capillary connection fitting 100"), in accordance with an example of the present disclosure. Figure 2 illustrates an isometric exploded view, and a cross-sectional view of the capillary connection fitting 100, in accordance with an example of the present disclosure. Figure 3 illustrates a cross-sectional view, similar to the cross-sectional view of Figure 1, of the capillary connection fitting 100, illustrating a spring-loaded disc pushing against a socket of a capillary, pushing the capillary to a port ground, and thereby activating a sealing section, in accordance with an example of the present disclosure.

Referring to Figures 1-3, the capillary connection fitting 100 may include a spring-loaded disc 102 pushing against a socket 104 of a capillary 106. The spring-loaded disc 102 may thus push the capillary 106 to port ground 108 of port 110, thereby activating sealing section 116. When a screw 112 is installed, a user may turn a screw drive 114 to transmit torque to the screw ** via the spring-loaded disc 102. A spring 118 may be compressably disposed between the spring-loaded disc 102 and an end cap 120.

The spring-loaded disc 102 may be operatively disposed between the screw drive 114 and the screw 112, and rotatable by the screw drive 114 to impart, by the screw 112, a sealing axial force to seal a capillary tip of the capillary 106 against the port ground 108 of the port 110. Further, the spring 118 may be compressably disposed between the spring-loaded disc 102 and the end cap 120 to impart the sealing axial force.

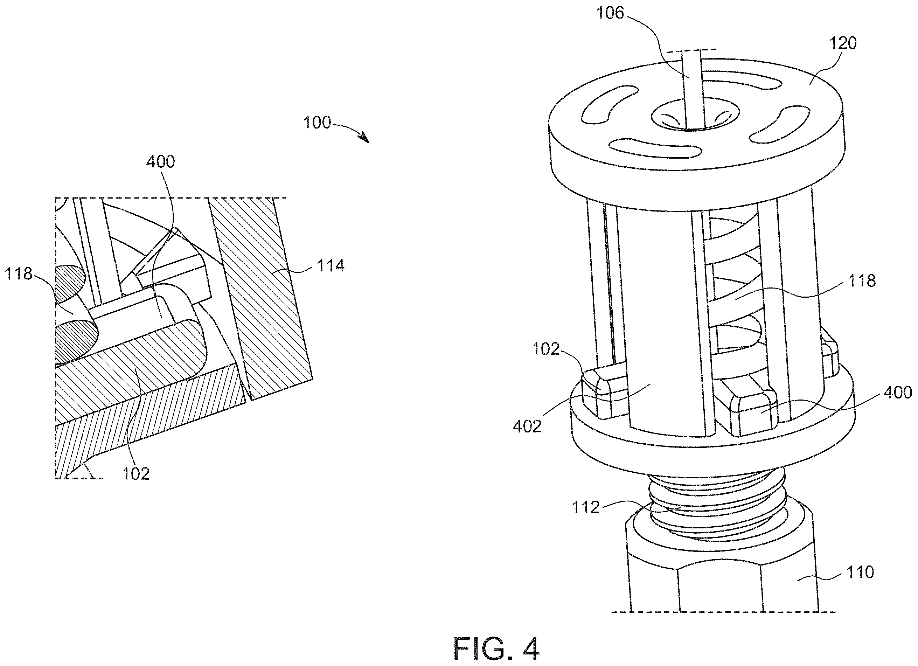

Figure 4 illustrates a cross-sectional view and a diagrammatic view of the capillary connection fitting 100 without certain components, illustrating how when the screw 112 is installed and the screw drive 114 is turned, torque is transmitted to the screw 112 via the spring-loaded disc 102, in accordance with an example of the present disclosure.

Referring to Figures 1-4, and particularly Figure 4, when the screw 112 is installed, a user may turn the screw drive 114 to transmit torque to the screw 112 via the spring-loaded disc 102. In this regard, drive protrusions 400 of the spring-loaded disc 102 contact driven columns 402 of the screw 112. Thus, when a user turns the screw drive 114, the drive protrusions 400 drive the driven columns 402 to transmit torque to the screw 112 via the spring-loaded disc 102. In the example of Figure 4, four drive protrusions 400 and four corresponding driven columns 402 are shown. However, a number of the drive protrusions 400 and the driven columns 402 may be two or more.

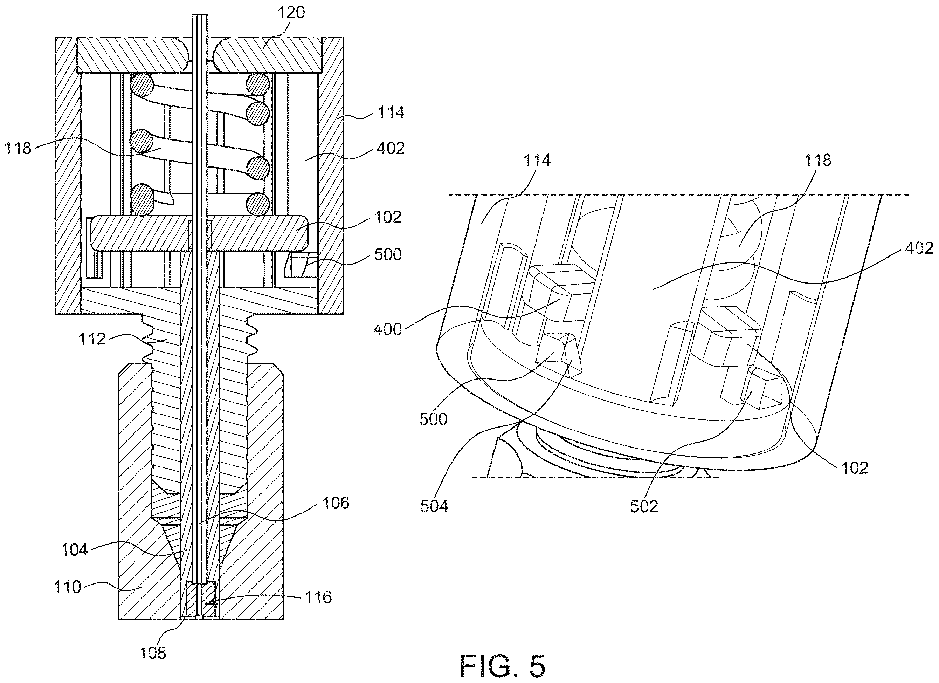

Figure 5 illustrates a cross-sectional view and a diagrammatic view of the capillary connection fitting 100 without certain components, illustrating how as the capillary 106 is pressed into the port ground 108 and the spring 118 is compressed via the spring-loaded disc 102, and when a maximum needed sealing force is reached, the spring-loaded disc 102 is decoupled from the screw drive 114 and the screw drive 114 rotates freely, in accordance with an example of the present disclosure.

Referring to Figures 1-5, and particularly Figure 5, as the capillary 106 is pressed more strongly into the port ground 108 due to rotation of the screw 112, the spring 118 is compressed via the spring-loaded disc 102. In this regard, when a maximum needed sealing force is reached, the spring-loaded disc 102 is decoupled from the screw drive 114 and the screw drive 114 can rotate freely. For example, the screw drive 114 may include screw drive members 500 that contact corresponding drive protrusions 400. Once the maximum needed sealing force is reached, the spring-loaded disc 102 is decoupled from the screw drive 114 as it moves upwards in the orientation of Figure 5 (e.g., the screw drive members 500 no longer contact the corresponding drive protrusions 400), and the screw drive 114 can rotate freely.

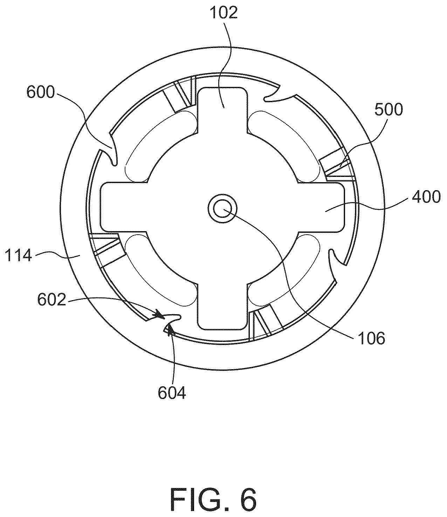

The screw drive members 500 may include a flat face 502 (which may also be angled). When the screw drive 114 is being utilized to rotate the screw 112 to increase the sealing force and compress the spring 118, the flat face 502 contacts the corresponding drive protrusion (e.g., of the drive protrusions 400). Alternatively, when the screw drive 114 is being utilized to rotate the screw 112 to decrease the sealing force and un-compress the spring 118, as disclosed herein with respect to Figure 6, acute angled face 604 of the torque indicating protrusions 600 contacts a corresponding drive protrusion (e.g., of the drive protrusions 400) to loosen the screw 112.

Thus, the screw drive 114 may include at least one screw drive member contiguously engageable with a corresponding drive protrusion of the spring-loaded disc 102 to rotate the spring-loaded disc 102. The at least one screw drive member may include a surface (e.g., flat face 502) that is generally parallel to a contact surface of the corresponding drive protrusion of the spring-loaded disc 102 to rotate the spring-loaded disc 102.

Figure 6 illustrates a diagrammatic view of the capillary connection fitting 100 without certain components, illustrating how when the screw drive 114 is turned further, no torque is transmitted to the screw 112 but there is an indication that a maximum axial force is reached, in accordance with an example of the present disclosure.

Referring to Figures 1-6, and particularly Figure 6, when a user turns the screw drive 114 further (e.g., clockwise in the orientation of Figure 6), no torque is transmitted to the screw 112, but there is some indication (e.g., acoustic clicking) that the maximum axial force is reached. For example, the screw drive 114 may include resilient torque indicating protrusions 600. The torque indicating protrusions 600 may be angled as shown in Figure 6. In this regard, when a user turns the screw drive 114 further (e.g., clockwise in the orientation of Figure 6), obtuse angled face 602 of the torque indicating protrusions 600 contacts a corresponding drive protrusion (e.g., of the drive protrusions 400) to generate an indication (e.g., acoustic clicking upon bending and release of the torque indicating protrusions 600) that the maximum axial force is reached. Similarly, when a user turns the screw drive 114 in an opposite direction (e.g., counter-clockwise in the orientation of Figure 6), acute angled face 604 of the torque indicating protrusions 600 contacts a corresponding drive protrusion (e.g., of the drive protrusions 400) to loosen the screw 112.

Thus, the screw drive 114 may include at least one resilient torque indicating protrusion engageable with a corresponding drive protrusion of the spring-loaded disc 102 to generate an indication of a maximum sealing axial force to seal the capillary tip of the capillary 106 against the port ground 108 of the port 110. The at least one resilient torque indicating protrusion may be angled (e.g., obtuse angled face 602) in a first direction to resiliently bend and generate the indication of the maximum sealing axial force. Further, the at least one resilient torque indicating protrusion may be angled (e.g., acute angled face 604) in a second direction to contact the corresponding drive protrusion of the spring-loaded disc to rotate the spring-loaded disc 102.

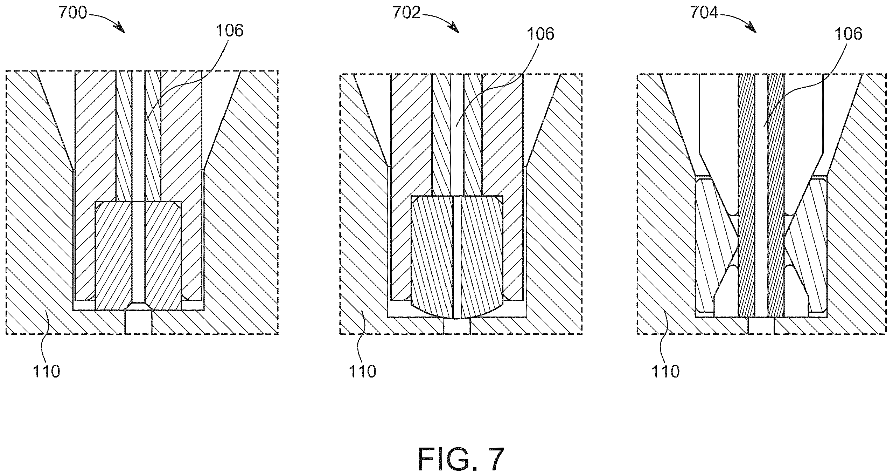

Figure 7 illustrates different sealing techniques to illustrate operation of the capillary connection fitting 100, in accordance with an example of the present disclosure.

Referring to Figures 1, 2, and 7, and particularly Figure 7, the capillary connection fitting 100 may utilize different sealing techniques which may differ in the needed axial force. In this regard, the needed axial force may be readily adjusted by using an appropriately dimensioned spring 118. The example of Figure 7 shows a PEEK-insert sealing technique at 700, a spherical SST-insert sealing technique at 702, and a radial seal fitting sealing technique at 704.

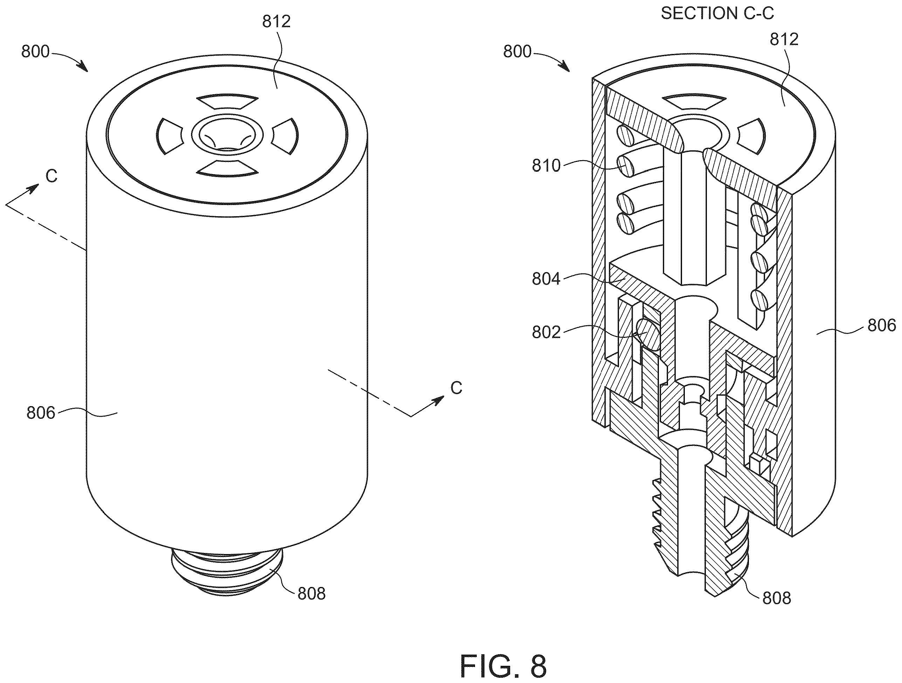

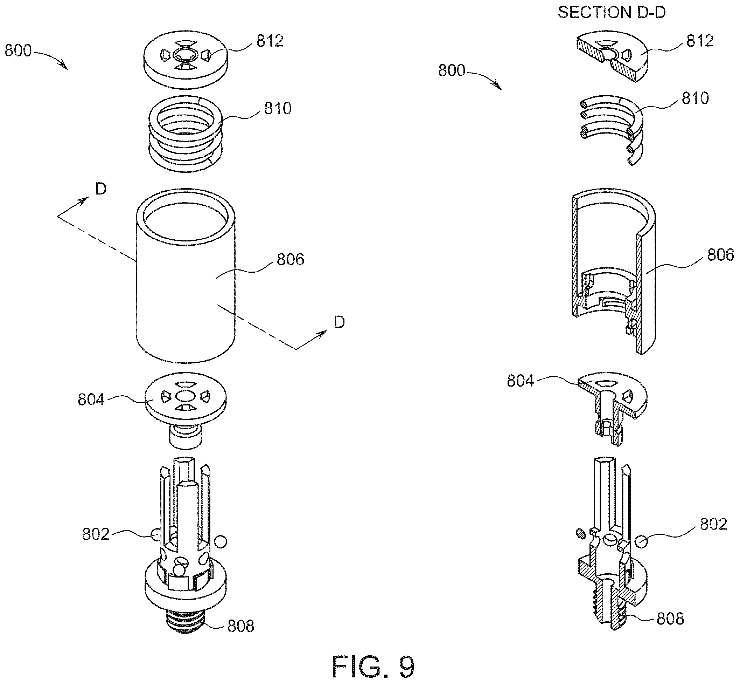

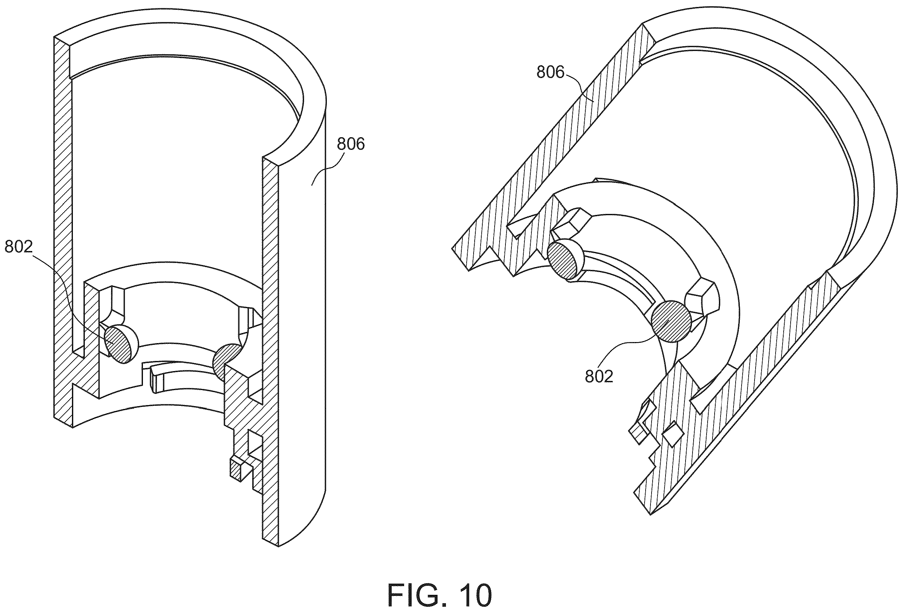

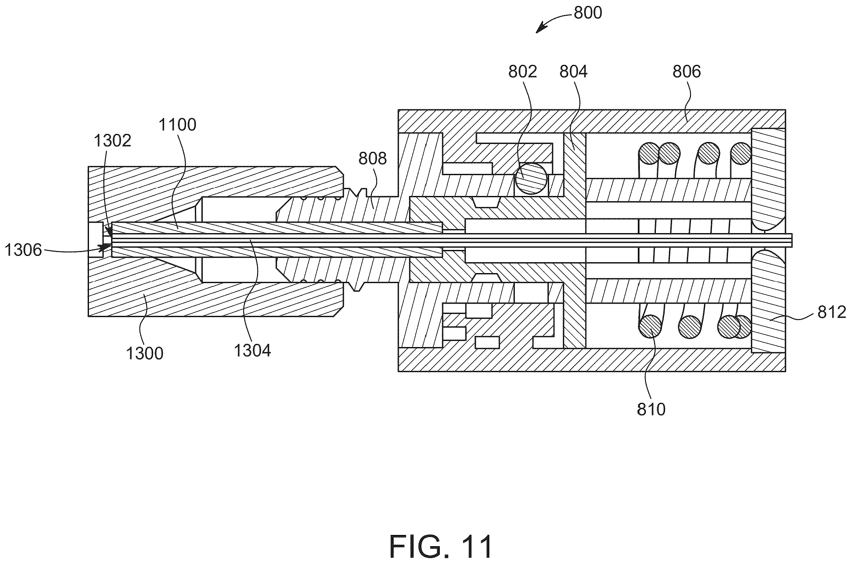

Figure 8 illustrates an isometric assembled view, and a cross-sectional view of a second embodiment of a capillary connection fitting 800, in accordance with an example of the present disclosure. Figure 9 illustrates an isometric exploded view, and a cross-sectional view of the capillary connection fitting 800, in accordance with an example of the present disclosure. Figure 10 illustrates cross-sectional views of a screw drive of the capillary connection fitting 800, to illustrate operation of lock balls, in accordance with an example of the present disclosure. Figure 11 illustrates a cross-sectional view, similar to the cross-sectional view of Figure 8, of the capillary connection fitting 800, illustrating a ball lock mechanism, in accordance with an example of the present disclosure.

Referring to Figures 8-11, the capillary connection fitting 800 may include a ball lock mechanism including lock balls 802. A spring carrier 804 may deflect up or down in the orientation of Figure 8 based on clockwise or counter-clockwise rotation of a screw drive 806 to rotate a screw 808. In this regard, as the spring carrier 804 is deflected sufficiently by screwing in the screw 808, the lock balls 802 plunge into the spring carrier 804 and the screw drive 806 is decoupled from the screw 808. The spring carrier 804 supports a sealing spring 810, the operation of which is described in further detail herein. The spring 810 may be disposed between the movable spring carrier 804 and a fixed end cap 812.

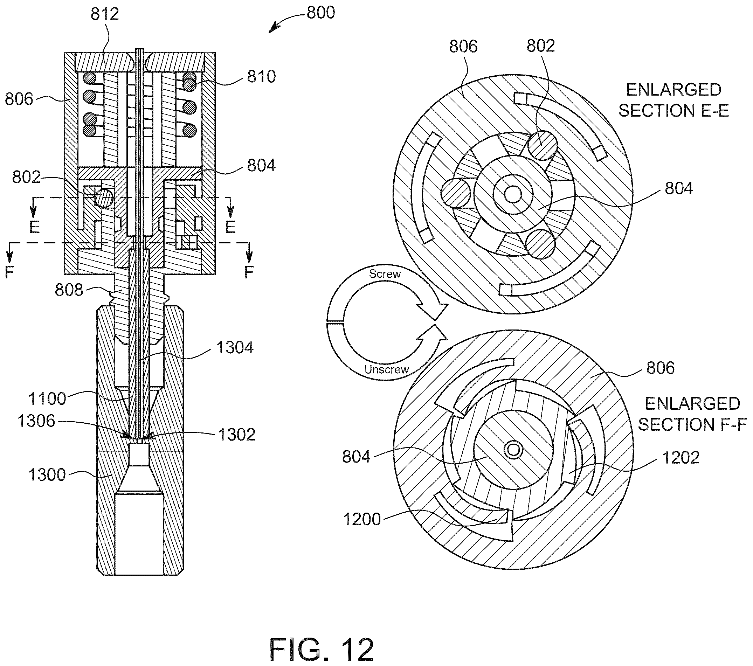

Figure 12 illustrates various cross-sectional views of the capillary connection fitting 800, illustrating operation of the lock balls 802 and flexible fingers for torque transmission to the screw 808, in accordance with an example of the present disclosure.

Referring to Figures 8-12, and particularly Figure 12, when the screw 808 is screwed in (e.g., into a port 1300), the spring carrier 804 is in the lower position and torque is transmitted from the screw drive 806 to the screw 808 via the lock balls 802. If a specified axial sealing force is achieved and the spring 810 is deflected as needed (e.g., when a maximum needed sealing force is reached), the lock balls 802 can fall into the spring carrier 804 and no further torque is transmitted. A user of the capillary connection fitting 800 may then receive acoustic feedback via a click mechanism that includes flexible fingers 1200 and freewheel teeth 1202. In this regard, when the screw drive 806 is rotated clockwise in the orientation of Figure 12, the flexible fingers 1200 snap due to contact with the freewheel teeth 1202 to generate an acoustic feedback indicating that no further torque is transmitted to the screw 808.

Thus, the capillary connection fitting 800 may include a screw drive 806, and a screw 808 rotatable by the screw drive 806 and insertable in a port 1300. A spring carrier 804 may be operatively disposed between the screw drive 806 and the screw, and movable along an axis of the spring carrier 804 by the screw drive 806 to impart, by the screw, a sealing axial force to seal a capillary tip of a capillary against a port ground of the port. The spring 810 may be compressably disposed between the spring carrier 804 and the end cap 812 to impart the sealing axial force. At least one lock ball may be disposed adjacent to the spring carrier 804 and radially movable between blocked and unblocked positions relative to the spring carrier 804 based on axial movement of the spring carrier 804. The at least one lock ball may be radially movable to the unblocked position towards the axis of the spring carrier 804 to decouple a driving engagement between the screw drive 806 and the screw. The at least one lock ball may be radially movable to the blocked position away from the axis of the spring carrier 804 to impart a driving engagement between the screw drive 806 and the screw 808. The screw drive 806 may include at least one resilient finger engageable with at least one corresponding freewheel tooth to generate, upon rotation of the screw drive 806, an indication of a maximum sealing axial force to seal the capillary tip of the capillary 1304 against the port ground of the port 1300. The screw drive 806 may include at least one resilient finger engageable with at least one corresponding freewheel tooth to unseal, upon rotation of the screw drive 806, the capillary tip 1302 of the capillary 1304 from the port ground 1306 of the port 1300.

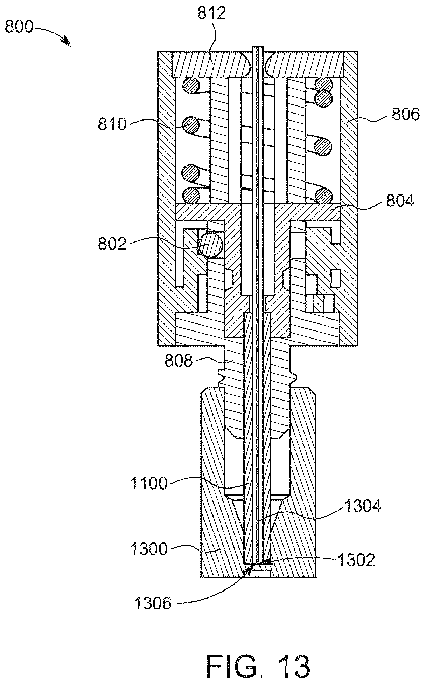

Figure 13 illustrates a cross-sectional view of a first stage of a connection operation of the capillary connection fitting 800, illustrating an initial stage when the capillary connection fitting 800 is screwed into a port and a capillary tip of a capillary touches a port ground of the port, lock balls transmit torque in clockwise and counter-clockwise directions to the screw 808 and are radially blocked by the spring carrier 804, in accordance with an example of the present disclosure.

Referring to Figures 8-13, and particularly Figure 13, for a first stage of a connection operation of the capillary connection fitting 800 to the port 1300, the capillary connection fitting 800 may be screwed into the port 1300 just deep enough so that a tip 1302 of a capillary 1304 touches a port ground 1306 of the port 1300. At this stage, the sealing spring 810 is still preloaded but not further compressed. Further, the lock balls 802 are in contact (e.g., transmit torque in both directions) between the screw drive 806 and the screw 808, and are radially blocked by the spring carrier 804.

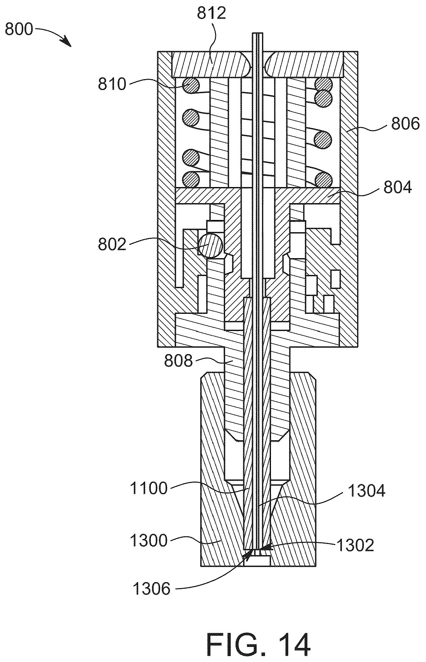

Figure 14 illustrates a cross-sectional view of a second stage of the connection operation of the capillary connection fitting 800, illustrating a further stage when the capillary connection fitting 800 is screwed into the port 1300 and a sealing force on the capillary tip 1302 against the port ground 1306 is increased by the spring 810, the lock balls 802 transmit torque in clockwise and counter-clockwise directions to the screw 808 and are radially blocked by the spring carrier 804, in accordance with an example of the present disclosure.

Referring to Figures 8-14, and particularly Figure 14, for a further stage of the connection operation of the capillary connection fitting 800 to the port 1300, the capillary connection fitting 800 may be screwed into the port 1300, so that the sealing force is increased. At this stage, the sealing spring 810 is further compressed and starts to apply a sealing force. The lock balls 802 remain in contact (e.g., to transmit torque in both directions) between the screw drive 806 and the screw 808, and are radially blocked by the spring carrier 804.

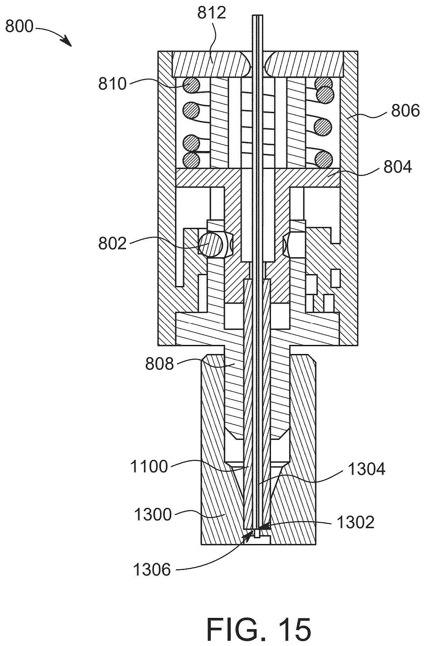

Figure 15 illustrates a cross-sectional view of a third stage of the connection operation of the capillary connection fitting 800, illustrating a further stage when the capillary connection fitting 800 is fully screwed into the port 1300 and the sealing force on the capillary tip 1302 against the port ground 1306 is maximum, the lock balls 802 are not radially blocked by the spring carrier 804, in accordance with an example of the present disclosure.

Referring to Figures 8-15, and particularly Figure 15, for a further stage of the connection operation of the capillary connection fitting 800 to the port 1300, the capillary connection fitting 800 may be fully screwed into the port 1300 so that the sealing force is at maximum. At this stage, the sealing spring 810 may be fully compressed and applies the specified sealing force onto the capillary tip 1302. The lock balls 802 are no longer radially blocked by the spring carrier 804. Further, the capillary 1304 with the socket 1100 holds the spring carrier 804 in place.

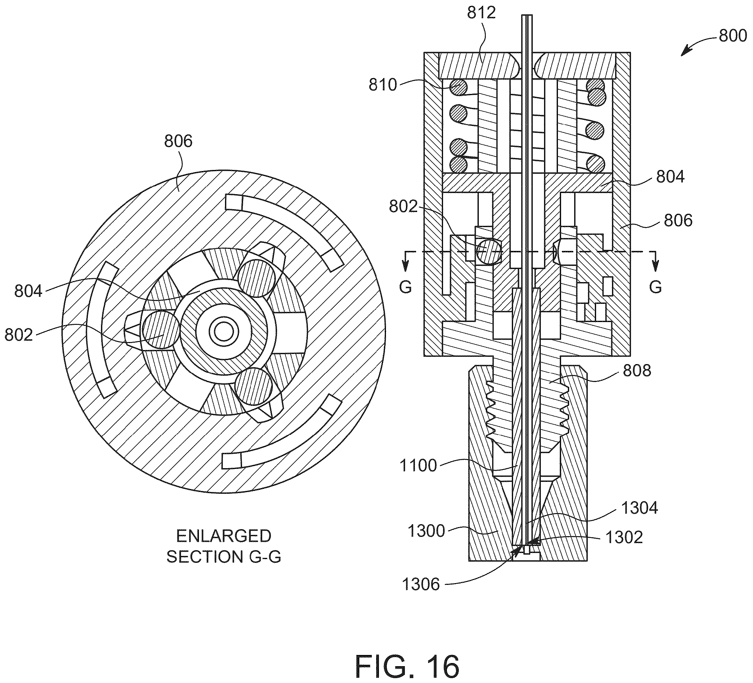

Figure 16 illustrates a cross-sectional view of a fourth stage of the connection operation of the capillary connection fitting 800, illustrating a further stage when the capillary connection fitting 800 is fully screwed into the port 1300 and the sealing force on the capillary tip 1302 against the port ground 1306 is maximum, the lock balls 802 move radially to the center when trying to further screw in the screw 808, in accordance with an example of the present disclosure.

Referring to Figures 8-16, and particularly Figure 16, for a further and final stage of the connection operation of the capillary connection fitting 800 to the port 1300, the capillary connection fitting 800 may be fully screwed into the port 1300 so that the sealing force is at maximum. At this stage, the sealing spring 810 may be fully compressed and applies the specified sealing force. The lock balls 802 may now move radially to the center when trying to further screw in the screw 808, thus eliminating any further torque transmission from the screw drive 806 to the screw 808. Further, at this stage, the capillary 1304 with the socket 1100 may hold the spring carrier 804 in place.

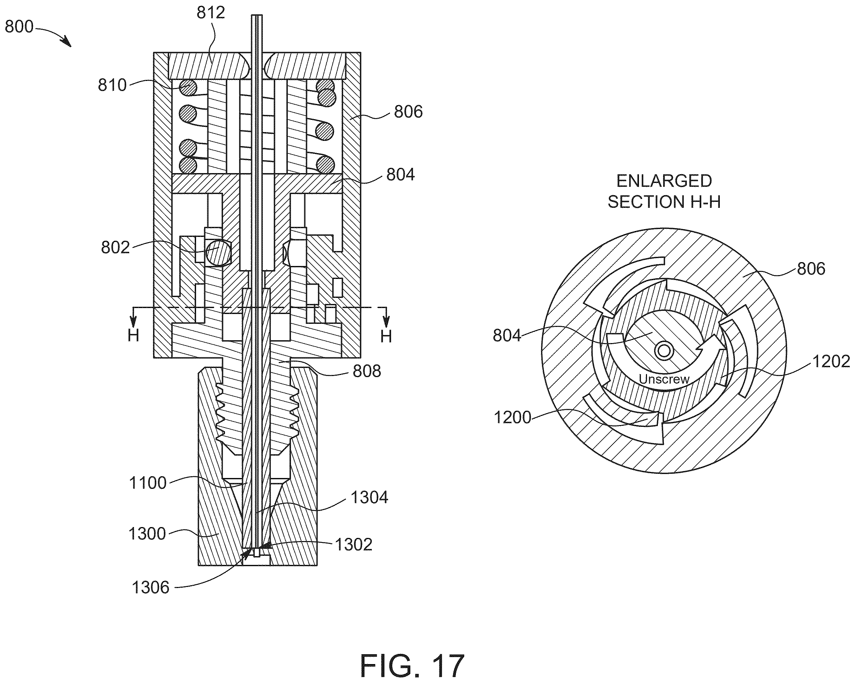

Figure 17 illustrates a cross-sectional view of a first stage of a disconnection operation of the capillary connection fitting 800, illustrating a first stage when the flexible fingers 1200 contact the freewheel teeth 1202 and start to apply torque in an unscrewing direction of the screw 808, in accordance with an example of the present disclosure.

Referring to Figures 8-17, and particularly Figure 17, for a first stage of a disconnection operation of the capillary connection fitting 800 from the port 1300, a user may start to unscrew the capillary connection fitting 800. At this stage, the sealing spring 810 may be fully compressed, and applies the specified sealing force onto the tip 1302 of the capillary 1304. The lock balls 802 do not transmit any torque, and the spring carrier 804 is held in place by the capillary with the socket 1100. Upon counter-clockwise rotation of the screw drive 806, the flexible fingers 1200 contact the freewheel teeth 1202 and start to apply a torque in an unscrewing (e.g., counter-clockwise) direction.

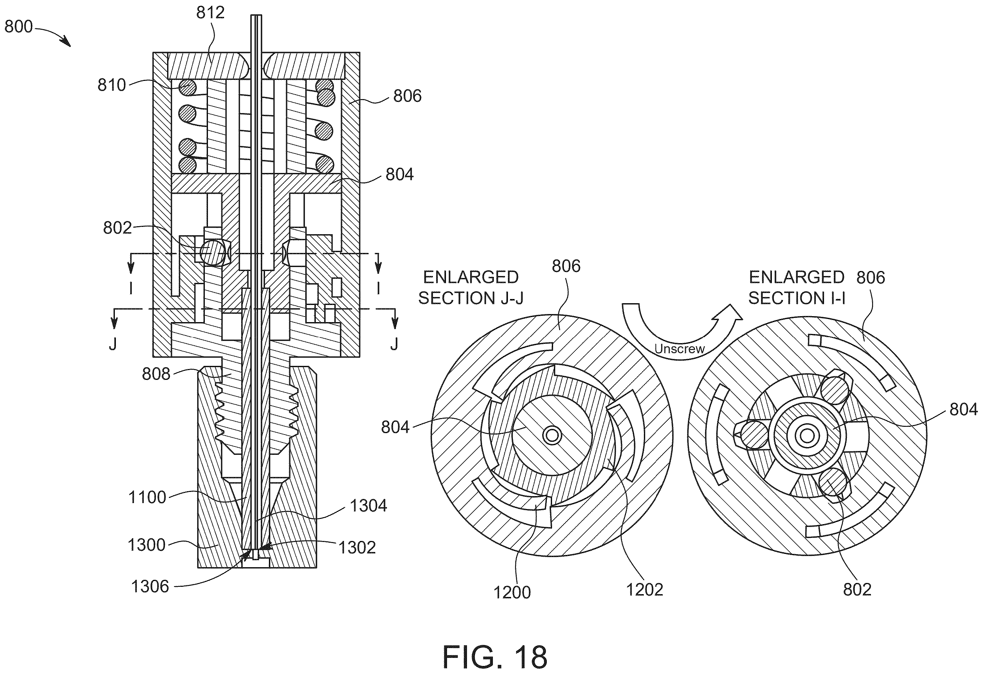

Figure 18 illustrates a cross-sectional view of a second stage of the disconnection operation of the capillary connection fitting 800, illustrating the second stage of continuation of torque application in the unscrewing direction of the screw 808, in accordance with an example of the present disclosure.

Referring to Figures 8-18, and particularly Figure 18, for a further stage of the disconnection operation of the capillary connection fitting 800 from the port 1300, as the screw drive 806 is further rotated counter-clockwise, the sealing spring 810 starts to loosen and push the spring carrier 804 downwards in the orientation of Figure 18. The lock balls 802 that are still not transmitting any torque begin to get pushed outwards. At this stage, the capillary with the socket 1100 continues to hold the spring carrier 804 in place. Further, the flexible fingers 1200 are in contact with the freewheel teeth 1202 and continue, based on counter-clockwise rotation of the screw drive 806, to apply torque in the unscrewing (e.g., counter-clockwise) direction.

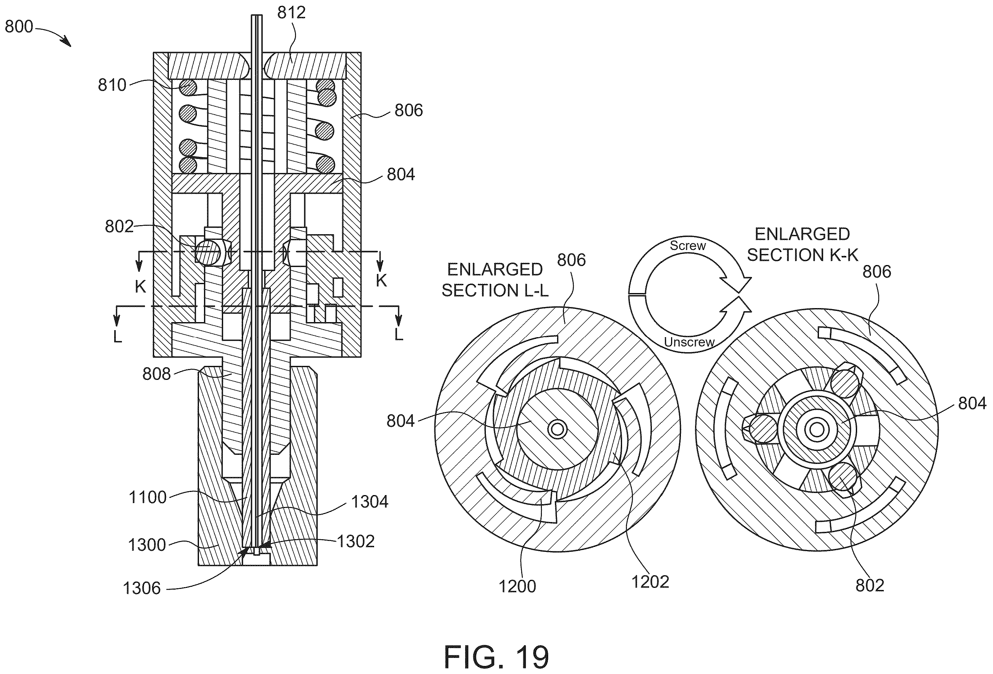

Figure 19 illustrates a cross-sectional view of a third stage of the disconnection operation of the capillary connection fitting 800, illustrating a third stage of continuation of torque application with the lock balls 802 in the unscrewing direction of the screw 808, in accordance with an example of the present disclosure.

Referring to Figures 8-19, and particularly Figure 19, for a final stage of the disconnection operation of the capillary connection fitting 800 from the port 1300, as the screw drive 806 is further rotated counter-clockwise, the sealing spring 810 is less compressed and continues to press the spring carrier 804 downwards in the orientation of Figure 18. The lock balls 802 are completely pushed outwards, and again transmit torque in both rotary directions.

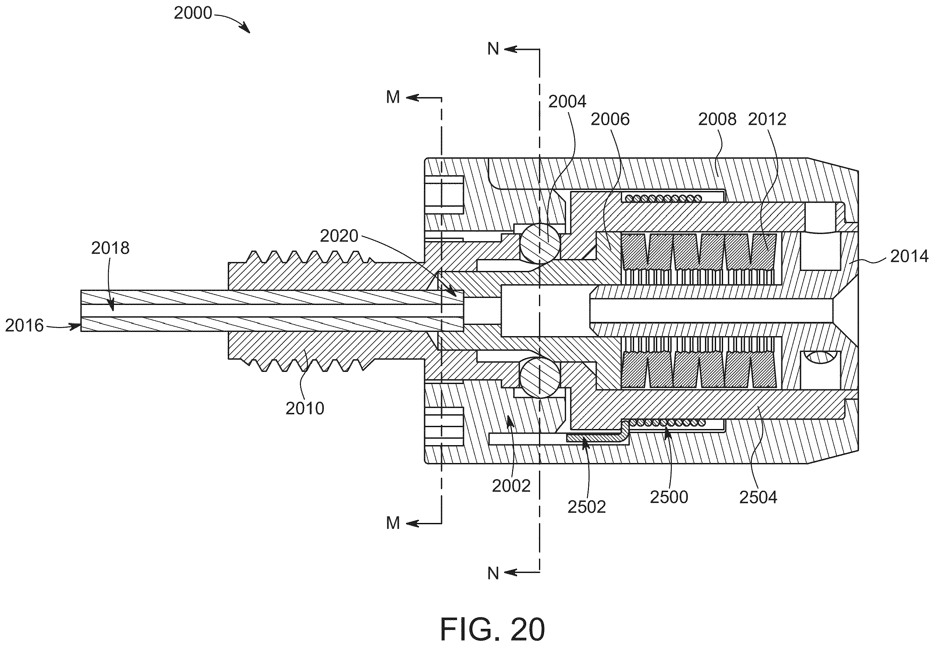

Figure 20 illustrates a cross-sectional view of a third embodiment of a capillary connection fitting 2000, in accordance with an example of the present disclosure.

Referring to Figure 20, the capillary connection fitting 2000 may include a hex-shaped clutch 2002 with lock balls 2004 that roll on a continuous surface. A spring carrier 2006 may deflect up or down in the orientation of Figure 20 based on clockwise or counter-clockwise rotation of a screw drive 2008 to rotate a screw 2010. In this regard, as the spring carrier 2006 is deflected sufficiently by screwing in the screw 2010, the lock balls 2004 move towards the spring carrier 2006 and the screw drive 2008 is decoupled from the screw 2010. The spring carrier 2006 supports a sealing spring 2012, the operation of which is described in further detail herein. The spring 2012 may be disposed between the movable spring carrier 2006 and a fixed end cap 2014.

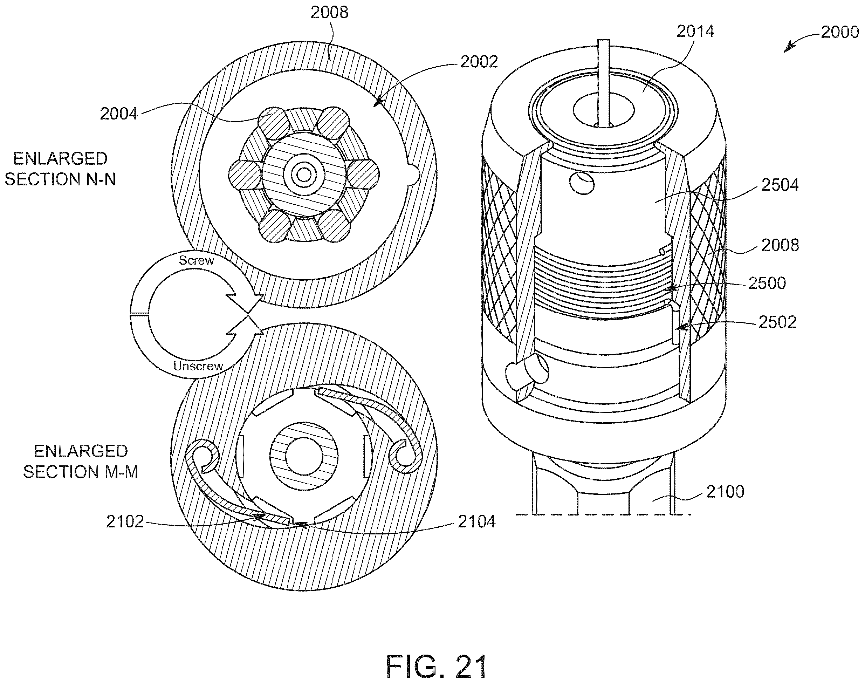

Figure 21 illustrates various cross-sectional views of the capillary connection fitting 2000, illustrating operation of the clutch, a wrap spring clutch, and flexible fingers, in accordance with an example of the present disclosure.

Referring to Figure 21, and particularly Figure 21, when the screw 2010 is screwed in (e.g., into a port 2100), the spring carrier 2006 is in the lower position and torque is transmitted from the screw drive 2008 to the screw 2010 via the lock balls 2004. If a specified axial sealing force is achieved and the spring 2012 is deflected as needed (e.g., when a maximum needed sealing force is reached), the lock balls 2004 can move towards the spring carrier 2006 and no further torque is transmitted. A user of the capillary connection fitting 2000 may then receive acoustic feedback via a click mechanism that includes flexible fingers 2102 and freewheel teeth 2104. In this regard, when the screw drive 2008 is rotated clockwise in the orientation of Figure 21, the flexible fingers 2102 snap due to contact with the freewheel teeth 2104 to generate an acoustic feedback indicating that no further torque is transmitted to the screw 2010.

Thus, the capillary connection fitting 2000 may include a screw drive 2008, and a screw 2010 rotatable by the screw drive 2008 and insertable in a port. A spring carrier 2006 may be operatively disposed between the screw drive 2008 and the screw 2010, and movable along an axis of the spring carrier 2006 by the screw drive 2008 to impart, by the screw 2010, a sealing axial force to seal a capillary tip of a capillary against a port ground of the port. The spring may be compressably disposed between the spring carrier 2006 and the end cap to impart the sealing axial force. At least one lock ball may be disposed adjacent to the spring carrier 2006 and radially movable between blocked and unblocked positions relative to the spring carrier 2006 based on axial movement of the spring carrier 2006. The at least one lock ball may be radially movable to the unblocked position towards the axis of the spring carrier 2006 to decouple a driving engagement between the screw drive 2008 and the screw 2010. The at least one lock ball may be radially movable to the blocked position away from the axis of the spring carrier 2006 to impart a driving engagement between the screw drive 2008 and the screw 2010. The screw drive 2008 may include at least one resilient finger engageable with at least one corresponding freewheel tooth to generate, upon rotation of the screw drive 2008, an indication of a maximum sealing axial force to seal the capillary tip of the capillary against the port ground of the port. The screw drive 2008 may include at least one resilient finger engageable with at least one corresponding freewheel tooth to unseal, upon rotation of the screw drive 2008, the capillary tip of the capillary from the port ground of the port. The clutch may be operatively connected to or formed with the screw drive 2008 to provide a continuous surface for the lock balls 2004 to roll on.

In a similar manner as disclosed herein with respect to Figure 13, referring to Figures 20 and 21, for a first stage of a connection operation of the capillary connection fitting 2000 to the port 2100, the capillary connection fitting 2000 may be screwed into the port 2100 just deep enough so that a tip 2016 of a capillary 2018 touches a port ground (not shown) of the port 2100. At this stage, the sealing spring 2012 is still preloaded but not further compressed. Further, the lock balls 2004 are in contact (e.g., transmit torque in both directions) between the screw drive 2008 and the screw 2010, and are radially blocked by the spring carrier 2006.

In a similar manner as disclosed herein with respect to Figure 14, with continued reference to Figures 20 and 21, for a further stage of the connection operation of the capillary connection fitting 2000 to the port 2100, the capillary connection fitting 2000 may be screwed into the port 2100, so that the sealing force is increased. At this stage, the sealing spring 2012 is further compressed and starts to apply a sealing force. The lock balls 2004 remain in contact (e.g., to transmit torque in both directions) between the screw drive 2008 and the screw 2010, and are radially blocked by the spring carrier 2006.

In a similar manner as disclosed herein with respect to Figure 15, with continued reference to Figures 20 and 21, for a further stage of the connection operation of the capillary connection fitting 2000 to the port 2100, the capillary connection fitting 2000 may be fully screwed into the port 2100 so that the sealing force is at maximum. At this stage, the sealing spring 2012 may be fully compressed and applies the specified sealing force onto the capillary tip 2016. The lock balls 2004 are no longer radially blocked by the spring carrier 2006. Further, the capillary 2018 with socket 2020 holds the spring carrier 2006 in place.

In a similar manner as disclosed herein with respect to Figure 16, with continued reference to Figures 20 and 21, for a further and final stage of the connection operation of the capillary connection fitting 2000 to the port 2100, the capillary connection fitting 2000 may be fully screwed into the port 2100 so that the sealing force is at maximum. At this stage, the sealing spring 2012 may be fully compressed and applies the specified sealing force. The lock balls 2004 may now move radially towards the center when trying to further screw in the screw 2010, thus eliminating any further torque transmission from the screw drive 2008 to the screw 2010. Further, at this stage, the capillary 2018 with the socket 2020 may hold the spring carrier 2006 in place.

In a similar manner as disclosed herein with respect to Figure 17, with continued reference to Figures 20 and 21, for a first stage of a disconnection operation of the capillary connection fitting 2000 from the port 2100, a user may start to unscrew the capillary connection fitting 2000. At this stage, the sealing spring 2012 may be fully compressed, and applies the specified sealing force onto the tip 2016 of the capillary 2018. The lock balls 2004 do not transmit any torque, and the spring carrier 2006 is held in place by the capillary with the socket 2020. Upon counter-clockwise rotation of the screw drive 2008, the flexible fingers 2102 contact the freewheel teeth 2104 and start to apply a torque in an unscrewing (e.g., counter-clockwise) direction.

In a similar manner as disclosed herein with respect to Figure 18, with continued reference to Figures 20 and 21, for a further stage of the disconnection operation of the capillary connection fitting 2000 from the port 2100, as the screw drive 2008 is further rotated counter-clockwise, the sealing spring 2012 starts to loosen and push the spring carrier 2006 downwards in the orientation of Figure 21. The lock balls 2004 that are still not transmitting any torque begin to get pushed outwards. At this stage, the capillary with the socket 2020 continues to hold the spring carrier 2006 in place. Further, the flexible fingers 2102 are in contact with the freewheel teeth 2104 and continue, based on counter-clockwise rotation of the screw drive 2008, to apply torque in the unscrewing (e.g., counter-clockwise) direction.

In a similar manner as disclosed herein with respect to Figure 19, with continued reference to Figures 20 and 21, for a final stage of the disconnection operation of the capillary connection fitting 2000 from the port 2100, as the screw drive 2008 is further rotated counter-clockwise, the sealing spring 2012 is less compressed and continues to press the spring carrier 2006 downwards in the orientation of Figure 21. The lock balls 2004 are completely pushed outwards, and again transmit torque in both rotary directions.

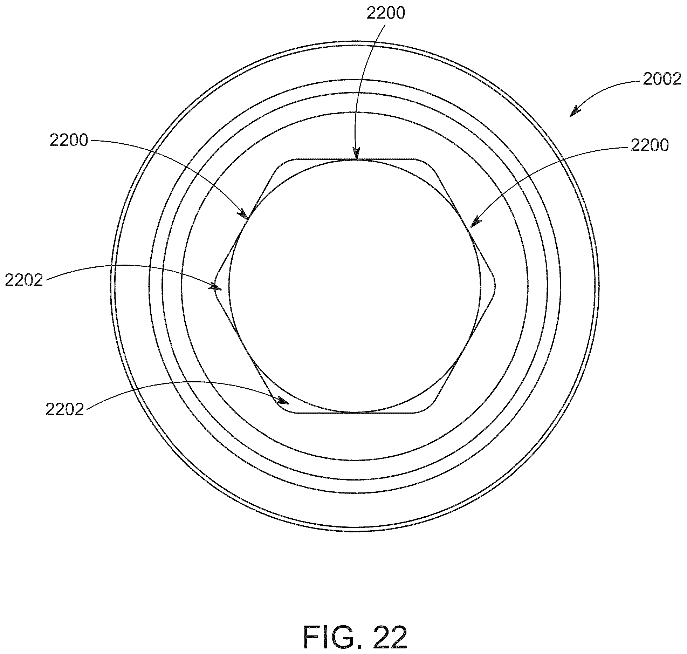

Figure 22 illustrates cross-sectional views of the capillary connection fitting 2000, illustrating operation of the clutch 2002, in accordance with an example of the present disclosure.

Referring to Figure 22, the clutch 2002 as disclosed herein may include a hexagon shape with sides as shown at 2200, and depressions at 2202. The sides 2200 provide a continuous surface for the lock balls 2004 to roll on. In the example of Figure 22, six or fewer lock balls 2004 may be utilized with the hex-shaped clutch 2002. Alternatively, if the clutch 2002 includes fewer sides and depressions, a reduced number of the lock balls 2004 may be similarly utilized.

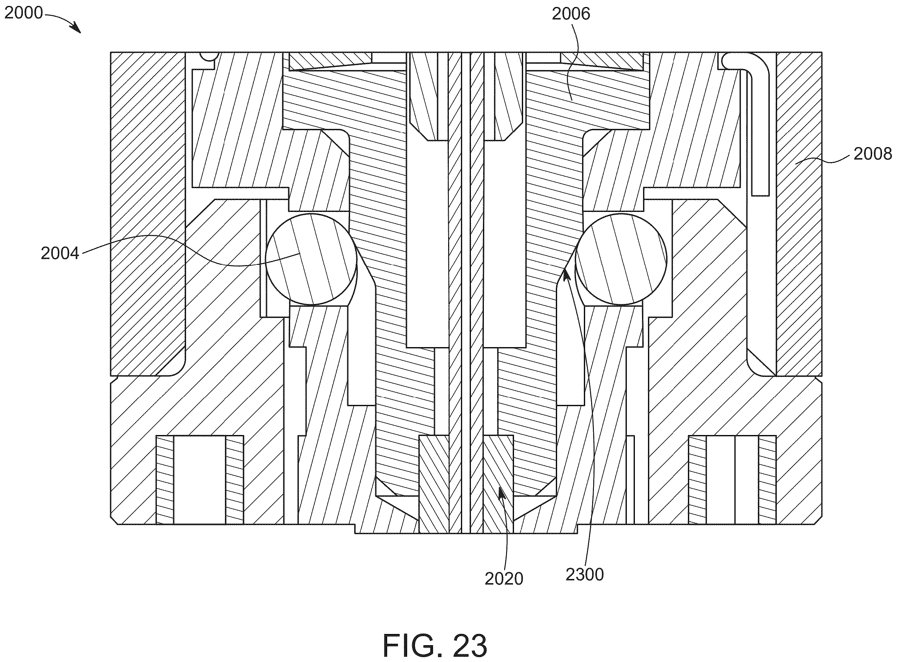

Figure 23 illustrates cross-sectional views of the capillary connection fitting 2000, illustrating operation of the spring carrier 2006, in accordance with an example of the present disclosure.

Referring to Figure 23, the spring carrier 2006 may include a coned surface 2300. The lock balls 2004 may be positioned in contact with the coned surface 2300 such that the lock balls 2004 roll on a continuous surface.

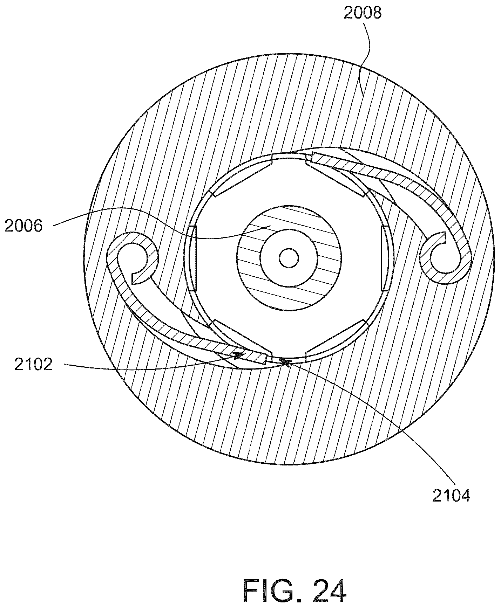

Figure 24 illustrates cross-sectional views of the capillary connection fitting 2000, illustrating operation of a release mechanism, in accordance with an example of the present disclosure.

Referring to Figure 24, the release mechanism for the capillary connection fitting 2000 may include separate flexible fingers 2102 as disclosed herein. As disclosed herein, a user of the capillary connection fitting 2000 may receive acoustic feedback via a click mechanism that includes the flexible fingers 2102 and the freewheel teeth 2104. In this regard, when the screw drive 2008 is rotated clockwise in the orientation of Figure 24, the flexible fingers 2102 snap due to contact with the freewheel teeth 2104 to generate an acoustic feedback indicating that no further torque is transmitted to the screw 2010. Further, as disclosed herein, upon counter-clockwise rotation of the screw drive 2008, the flexible fingers 2102 contact the freewheel teeth 2104 and apply a torque in an unscrewing (e.g., counter-clockwise) direction.

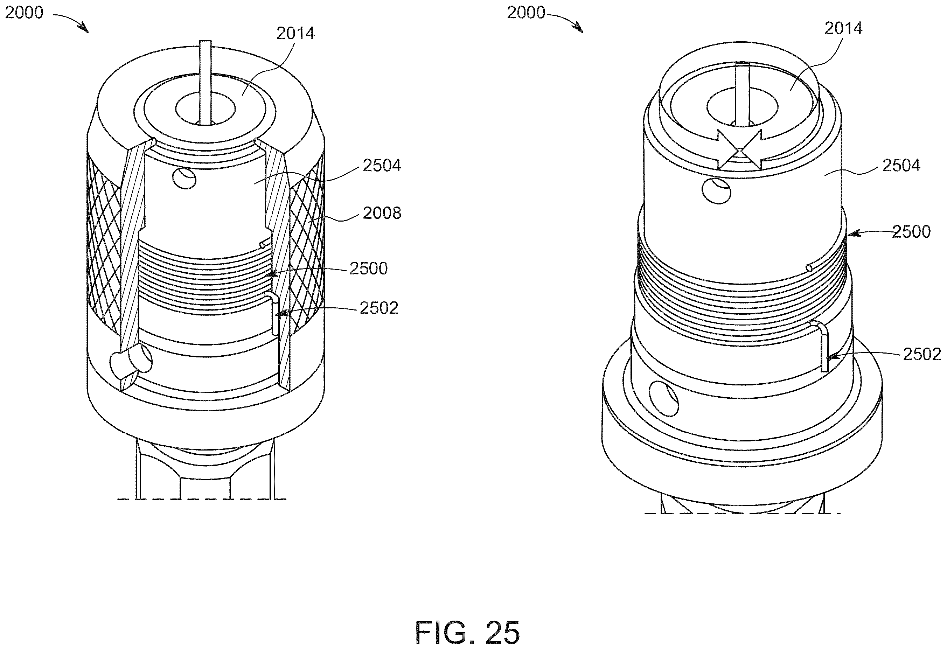

Figure 25 illustrates cross-sectional views of the capillary connection fitting 2000, illustrating an alternative release mechanism, in accordance with an example of the present disclosure.

Referring to Figure 25, an alternative type of the release mechanism may include a left-hand coiled spring 2500 including a driver 2502. When the driver 2502 is pushed clockwise (e.g., screwing direction), the internal diameter of the wrap spring 2500 is enlarged and the wrap spring 2500 slips around the cylindrical surface of a screw mount 2504 that is formed with or otherwise attached to the screw 2010. When the driver 2502 is pushed counter-clockwise (e.g., unscrewing direction), the internal diameter of the wrap spring 2500 is reduced due to the friction between the spring 2500 and the screw mount 2504, thus transmitting torque. The release mechanism including the spring 2500 provides for self-adaptation to the needed unscrewing torque.

Thus, the capillary connection fitting 2000 may include a coiled spring 2500 disposed on an outer surface of a screw mount 2504 and including a driver 2502 that is movable upon rotation of the screw drive to transmit torque from the screw.

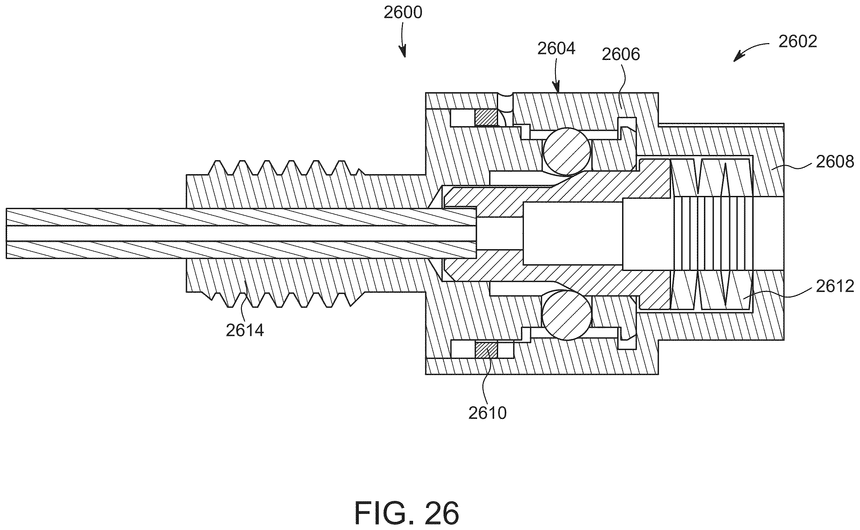

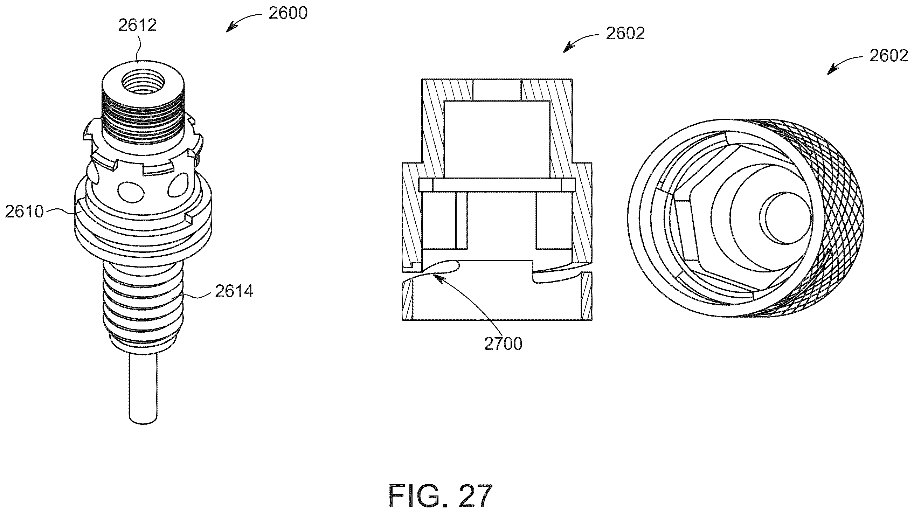

Figure 26 illustrates a cross-sectional view of a fourth embodiment of a capillary connection fitting 2600, in accordance with an example of the present disclosure. Figure 27 illustrates further details of the capillary connection fitting 2600, in accordance with an example of the present disclosure.

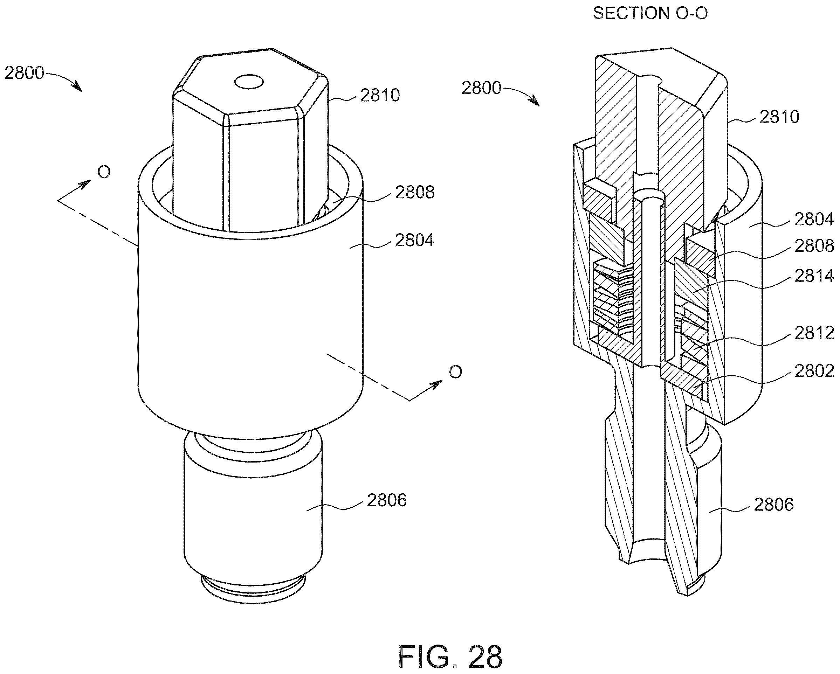

Referring to Figures 26 and 27, the capillary connection fitting 2600 may utilize an axial force controlled decoupling in a similar manner as the capillary connection fitting 800 but in a comparably smaller size in a similar manner as capillary connection fitting 2800 disclosed herein with reference to Figures 28-33. The capillary connection fitting 2600 may be utilized in a system that utilizes a capillary connection fitting that is relatively smaller but also with overtightening protection as disclosed herein with respect to the tool less (and generally hand operated) capillary connection fittings 100, 800, and 2000.

For the capillary connection fitting 2600, a housing 2602 may include a finger tight screw drive 2604, a torque transmission clutch 2606, and a spring compression element (e.g., end cap 2608) all combined into a single part. The capillary connection fitting 2600 may further include a counter-geometry for a releasing mechanism (e.g., vertical ratchet 2610) that is integrated in the housing 2602.

In one example, with respect to the release mechanism for the capillary connection fitting 2600, the release mechanism may include the spring 2500 of the capillary connection fitting 2000.

A size of the capillary connection fitting 2600 may depend on factors that include a size (e.g., height and outer diameter) of spring 2612. In the example of Figure 26, the spring 2612 may include stacked spring washers. In this regard, other types of springs may be utilized and include different shapes and sizes.

The release mechanism (e.g., vertical ratchet 2610) for the capillary connection fitting 2600 may include a spring loaded and toothed washer. The vertical ratchet 2610 may be rotationally locked.

The capillary connection fitting 2600 may include the housing 2602 that includes ramps 2700 that can interact with the vertical ratchet 2610. When the capillary connection fitting 2600 is being screwed in and a correct axial force is reached, the housing 2602 may spin freely. At this stage, the vertical ratchet 2610 is pushed away with a clicking sound being heard. The clicking sound may be created by the vertical ratchet 2610 moving up and down. A spring (not shown) may be positioned between the vertical ratchet 2610 and the screw 2614 to constantly push the vertical ratchet 2610 against the screw 2614 (e.g., towards the right in the orientation of Figure 26). When unscrewing, the vertical ratchet 2610 is forced to rotate with the screw 2614 and the housing 2602.

Thus, the capillary connection fitting 2600 may include a screw drive 2604, and a screw 2614 rotatable by the screw drive 2604 and insertable in a port. A spring carrier may be operatively disposed between the screw drive 2604 and the screw 2614, and movable along an axis of the spring carrier by the screw drive 2604 to impart, by the screw 2614, a sealing axial force to seal a capillary tip of a capillary against a port ground of the port. The spring may be compressably disposed between the spring carrier and the end cap to impart the sealing axial force. At least one lock ball may be disposed adjacent to the spring carrier and radially movable between blocked and unblocked positions relative to the spring carrier based on axial movement of the spring carrier. The at least one lock ball may be radially movable to the unblocked position towards the axis of the spring carrier to decouple a driving engagement between the screw drive 2604 and the screw 2614. The at least one lock ball may be radially movable to the blocked position away from the axis of the spring carrier to impart a driving engagement between the screw drive 2604 and the screw 2614. A ratchet may be disposed on a screw mount connected to or formed with the screw 2614. The screw drive 2604 may include at least one ramp to interact with the ratchet to transmit torque from the screw drive 2604 to the screw 2614.

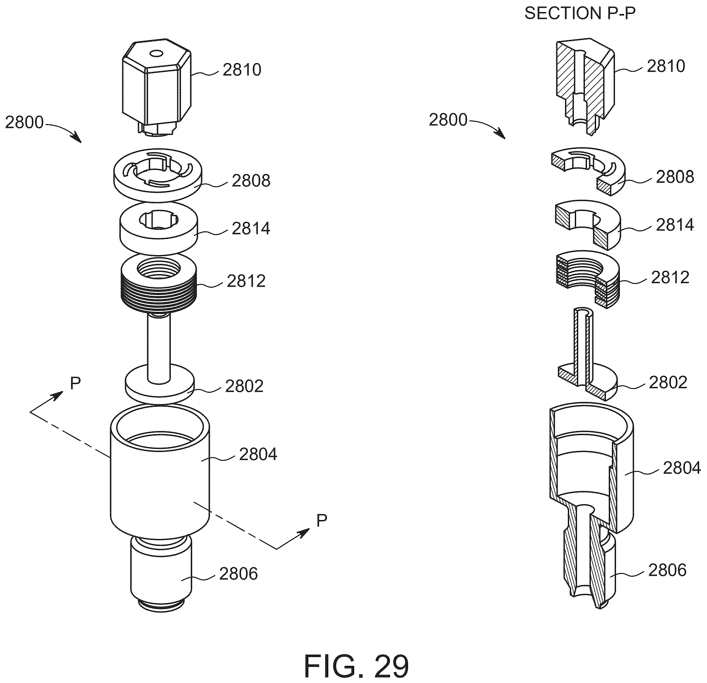

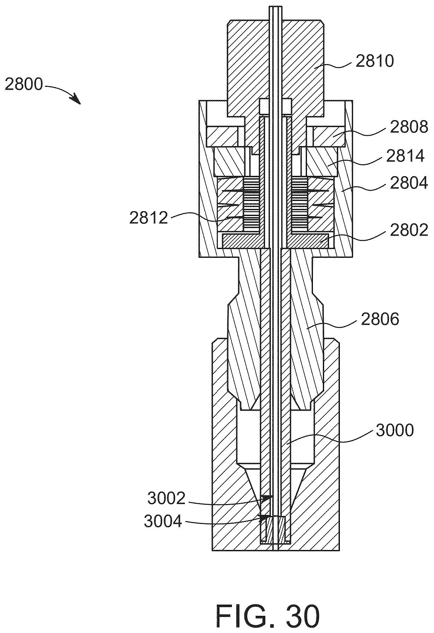

Figure 28 illustrates an isometric assembled view, and a cross-sectional view of a fifth embodiment of the capillary connection fitting 2800, in accordance with an example of the present disclosure. Figure 29 illustrates an isometric exploded view, and a cross-sectional view of the capillary connection fitting 2800, in accordance with an example of the present disclosure. Figure 30 illustrates a cross-sectional view, similar to the cross-sectional view of Figure 28, of the capillary connection fitting 2800, illustrating components such as a spring-loaded disc, a torque transmitter, a screw, and a tool-operated screw drive, in accordance with an example of the present disclosure.

Referring to Figures 28-30, a spring-loaded disc 2802 may push against a socket 3000 of a capillary 3002. This action may push the capillary 3002 to port ground 3004, thereby activating a sealing function. A torque transmitter 2804 may be permanently connected to a threaded screw 2806, for example, by a press fit. An opening member 2808 may also be permanently connected to the screw 2806, for example, via press fit or welding. A screw drive 2810 may be axially fixed to the spring-loaded disc 2802.

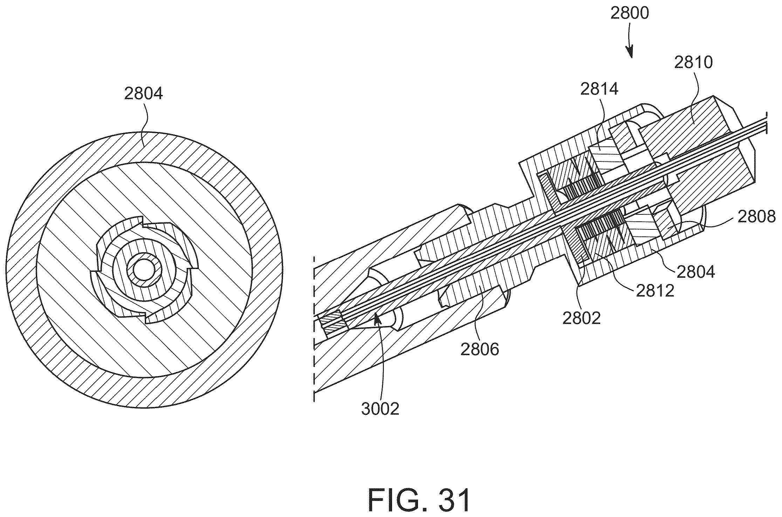

Figure 31 illustrates cross-sectional views of the capillary connection fitting 2800, illustrating how when the screw is installed and the screw drive is turned, torque is transmitted to the screw via the torque transmitter, in accordance with an example of the present disclosure.

Referring to Figures 28-31, and particularly Figure 31, when the screw 2806 is installed, a user may turn the screw drive 2810. This turning action may transmit the torque to the screw 2806 via the torque transmitter 2804.

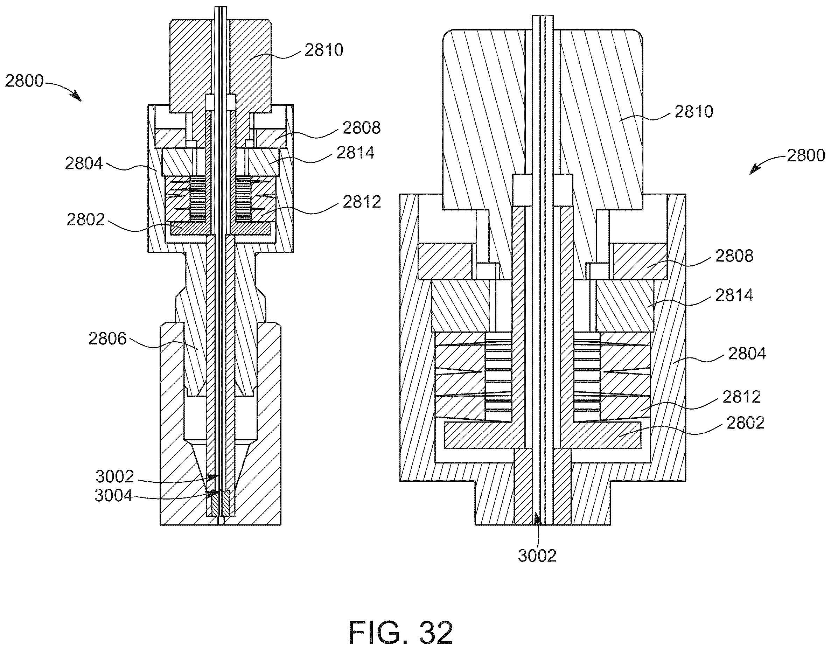

Figure 32 illustrates cross-sectional and enlarged views of the capillary connection fitting 2800, illustrating how when the capillary is pressed into the port ground of a port and a spring is compressed via the spring-loaded disc, when a maximum needed sealing force is reached, the torque transmitter is decoupled from the screw drive and the screw drive can rotate freely, in accordance with an example of the present disclosure.

Referring to Figures 28-32, and particularly Figure 32, as the capillary 3002 is pressed more strongly into the port ground 3004, a spring 2812 may be compressed via the spring-loaded disc 2802. In this regard, the spring 2812 may be compressably disposed between the spring-loaded disc 2802 and a spring retainer 2814 to impart a sealing axial force. When a maximum needed sealing force is reached, the torque transmitter 2804 may be decoupled from the screw drive 2810, and the screw drive 2810 may rotate freely within the opening member 2808.

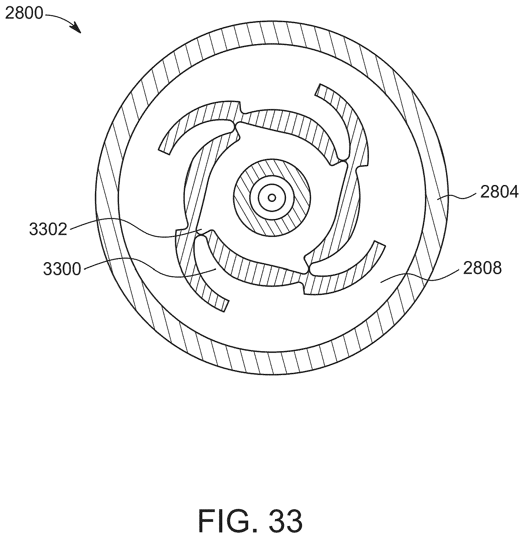

Figure 33 illustrates a cross-sectional view of the capillary connection fitting 2800, illustrating how when the screw drive is turned further, no torque is transmitted to the screw but there is an indication that a maximum axial force is reached, in accordance with an example of the present disclosure.

Referring to Figures 28-33, and particularly Figure 33, the opening member 2808 may include a click mechanism such that when a user is turning the screw drive 2810 further (e.g., clockwise in the orientation of Figures 28 and 33), no torque is transmitted to the screw 2806. At this stage, a user may receive acoustic feedback that the maximum axial force is reached. For example, the click mechanism may include flexible fingers 3300 and freewheel teeth 3302. In this regard, when the screw drive 2810 is rotated clockwise in the orientation of Figures 28 and 33, the flexible fingers 3300 snap due to contact with the freewheel teeth 3302 to generate an acoustic feedback indicating that no further torque is transmitted to the screw 2806. Further, upon counter-clockwise rotation of the screw drive 2810, the flexible fingers 3300 contact the freewheel teeth 3302 and apply a torque in an unscrewing (e.g., counter-clockwise) direction.

Thus, the capillary connection fitting 2800 may include a screw drive 2810, and a screw 2806 rotatable by the screw drive 2810 and insertable in a port. A spring-loaded disc 2802 may be operatively disposed between the screw drive 2810 and the screw 2806, and axially movable by a socket of a capillary to impart, by the spring-loaded disc 2802, a sealing axial force to seal a capillary tip of the capillary against a port ground of the port. A spring may be compressably disposed between the spring-loaded disc 2802 and a spring retainer to impart the sealing axial force. The spring may be formed of stacked spring washers. The screw drive 2810 may include at least one freewheel tooth contiguously engageable with at least one corresponding flexible finger of an opening member to generate an indication of a maximum sealing axial force to seal the capillary tip of the capillary against the port ground of the port. The opening member may be fixedly connected to a torque transmitter that is fixedly connected to the screw 2806. The screw drive 2810 may include a plurality of freewheel teeth contiguously engageable with corresponding flexible fingers of an opening member to generate an indication of a maximum sealing axial force to seal the capillary tip of the capillary against the port ground of the port. The capillary may be disposable through the screw drive 2810, the screw 2806, and the spring-loaded disc 2802.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following items -and their equivalents -in which all terms are meant in their broadest reasonable sense unless otherwise indicated.
The invention is further embodied by the following items:
1. A capillary connection fitting comprising:
   a screw drive;
   a screw rotatable by the screw drive and insertable in a port; and
   a spring carrier operatively disposed between the screw drive and the screw, and movable along an axis of the spring carrier by the screw drive to impart, by the screw, a sealing axial force to seal a capillary tip of a capillary against a port ground of the port.
2. The capillary connection fitting according to item 1, further comprising:
   a spring compressably disposed between the spring carrier and an end cap to impart the sealing axial force.
3. The capillary connection fitting according to item 1, further comprising:
   at least one lock ball disposed adjacent to the spring carrier and radially movable between blocked and unblocked positions relative to the spring carrier based on axial movement of the spring carrier.
4. The capillary connection fitting according to item 3, wherein the at least one lock ball is radially movable to the unblocked position towards the axis of the spring carrier to decouple a driving engagement between the screw drive and the screw.
5. The capillary connection fitting according to item 3, wherein the at least one lock ball is radially movable to the blocked position away from the axis of the spring carrier to impart a driving engagement between the screw drive and the screw.
6. The capillary connection fitting according to item 1, wherein the screw drive includes at least one resilient finger engageable with at least one corresponding freewheel tooth to generate, upon rotation of the screw drive, an indication of a maximum sealing axial force to seal the capillary tip of the capillary against the port ground of the port.
7. The capillary connection fitting according to item 1, wherein the screw drive includes at least one resilient finger engageable with at least one corresponding freewheel tooth to unseal, upon rotation of the screw drive, the capillary tip of the capillary from the port ground of the port.
8. The capillary connection fitting according to item 1, further comprising:
   a spring to bias the spring carrier, wherein the spring is formed of stacked spring washers.
9. The capillary connection fitting according to item 1, further comprising:
   at least one lock ball disposed adjacent to the spring carrier and radially movable relative to the spring carrier; and
   a clutch operatively connected to or formed with the screw drive to provide a continuous surface for the at least one lock ball to roll on.
10. The capillary connection fitting according to item 9, wherein the clutch includes a hexagonal shape.
11. The capillary connection fitting according to item 1, further comprising:
   a coiled spring disposed on an outer surface of a screw mount and including a driver that is movable upon rotation of the screw drive to transmit torque from the screw drive to the screw.
12. The capillary connection fitting according to item 1, further comprising:
   a ratchet disposed on a screw mount connected to or formed with the screw,
   wherein the screw drive includes at least one ramp to interact with the ratchet to transmit torque from the screw drive to the screw.
13. A capillary connection fitting comprising:
   a screw drive to rotate a screw; and
   a spring carrier operatively disposed between the screw drive and the screw, and movable along an axis of the spring carrier by the screw drive to impart, by the screw, a sealing axial force to seal a capillary tip of a capillary against a port ground of a port.
14. The capillary connection fitting according to item 13, further comprising:
   at least one lock ball disposed adjacent to the spring carrier and radially movable between blocked and unblocked positions relative to the spring carrier based on axial movement of the spring carrier.
15. The capillary connection fitting according to item 13, wherein the screw drive includes at least one resilient finger engageable with at least one corresponding freewheel tooth to generate, upon rotation of the screw drive, an indication of a maximum sealing axial force to seal the capillary tip of the capillary against the port ground of the port.
16. The capillary connection fitting according to item 13, wherein the screw drive includes at least one resilient finger engageable with at least one corresponding freewheel tooth to unseal, upon rotation of the screw drive, the capillary tip of the capillary from the port ground of the port.
17. The capillary connection fitting according to item 13, further comprising:
   at least one lock ball disposed adjacent to the spring carrier and radially movable relative to the spring carrier; and
   a clutch operatively connected to or formed with the screw drive to provide a continuous surface for the at least one lock ball to roll on.
18. The capillary connection fitting according to item 13, further comprising:
   a coiled spring disposed on an outer surface of a screw mount and including a driver that is movable upon rotation of the screw drive to transmit torque from the screw drive to the screw.
19. The capillary connection fitting according to item 13, further comprising:
   a ratchet disposed on a screw mount connected to or formed with the screw,
   wherein the screw drive includes at least one ramp to interact with the ratchet to transmit torque from the screw drive to the screw.
20. A capillary connection fitting comprising:
   a spring carrier movable along an axis of the spring carrier upon rotation of a screw drive to impart, by a screw, a sealing axial force to seal a capillary tip of a capillary against a port ground of a port.

## Claims

**1.** A capillary connection fitting comprising:
a screw drive;
a screw rotatable by the screw drive and insertable in a port; and
a spring carrier operatively disposed between the screw drive and the screw, and movable along an axis of the spring carrier by the screw drive to impart, by the screw, a sealing axial force to seal a capillary tip of a capillary against a port ground of the port.

**2.** The capillary connection fitting according to claim 1, further comprising:
a spring compressably disposed between the spring carrier and an end cap to impart the sealing axial force.

**3.** The capillary connection fitting according to claim 1, further comprising:
at least one lock ball disposed adjacent to the spring carrier and radially movable between blocked and unblocked positions relative to the spring carrier based on axial movement of the spring carrier.

**4.** The capillary connection fitting according to claim 3,
(i) wherein the at least one lock ball is radially movable to the unblocked position towards the axis of the spring carrier to decouple a driving engagement between the screw drive and the screw; or
(ii) wherein the at least one lock ball is radially movable to the blocked position away from the axis of the spring carrier to impart a driving engagement between the screw drive and the screw.

**5.** The capillary connection fitting according to claim 1,
(i) wherein the screw drive includes at least one resilient finger engageable with at least one corresponding freewheel tooth to generate, upon rotation of the screw drive, an indication of a maximum sealing axial force to seal the capillary tip of the capillary against the port ground of the port; or
(ii) wherein the screw drive includes at least one resilient finger engageable with at least one corresponding freewheel tooth to unseal, upon rotation of the screw drive, the capillary tip of the capillary from the port ground of the port.

**6.** The capillary connection fitting according to claim 1, further comprising:
a spring to bias the spring carrier, wherein the spring is formed of stacked spring washers.

**7.** The capillary connection fitting according to claim 1, further comprising:
at least one lock ball disposed adjacent to the spring carrier and radially movable relative to the spring carrier; and
a clutch operatively connected to or formed with the screw drive to provide a continuous surface for the at least one lock ball to roll on.

**8.** The capillary connection fitting according to claim 7, wherein the clutch includes a hexagonal shape.

**9.** The capillary connection fitting according to claim 1,
(i) further comprising:
a coiled spring disposed on an outer surface of a screw mount and including a driver that is movable upon rotation of the screw drive to transmit torque from the screw drive to the screw; or
(ii) further comprising:
a ratchet disposed on a screw mount connected to or formed with the screw,
wherein the screw drive includes at least one ramp to interact with the ratchet to transmit torque from the screw drive to the screw.

**10.** A capillary connection fitting comprising:
a screw drive to rotate a screw; and
a spring carrier operatively disposed between the screw drive and the screw, and movable along an axis of the spring carrier by the screw drive to impart, by the screw, a sealing axial force to seal a capillary tip of a capillary against a port ground of a port.

**11.** The capillary connection fitting according to claim 10, further comprising:
at least one lock ball disposed adjacent to the spring carrier and radially movable between blocked and unblocked positions relative to the spring carrier based on axial movement of the spring carrier.

**12.** The capillary connection fitting according to claim 10,
(i) wherein the screw drive includes at least one resilient finger engageable with at least one corresponding freewheel tooth to generate, upon rotation of the screw drive, an indication of a maximum sealing axial force to seal the capillary tip of the capillary against the port ground of the port; or
(ii) wherein the screw drive includes at least one resilient finger engageable with at least one corresponding freewheel tooth to unseal, upon rotation of the screw drive, the capillary tip of the capillary from the port ground of the port.

**13.** The capillary connection fitting according to claim 10,
(i) further comprising:
at least one lock ball disposed adjacent to the spring carrier and radially movable relative to the spring carrier; and
a clutch operatively connected to or formed with the screw drive to provide a continuous surface for the at least one lock ball to roll on;
(ii) further comprising:
a coiled spring disposed on an outer surface of a screw mount and including a driver that is movable upon rotation of the screw drive to transmit torque from the screw drive to the screw; or
(iii) further comprising:
a ratchet disposed on a screw mount connected to or formed with the screw,
wherein the screw drive includes at least one ramp to interact with the ratchet to transmit torque from the screw drive to the screw.

**15.** A capillary connection fitting comprising:
a spring carrier movable along an axis of the spring carrier upon rotation of a screw drive to impart, by a screw, a sealing axial force to seal a capillary tip of a capillary against a port ground of a port.
